# EUROPÄISCHE PATENTSCHRIFT

(11) **EP 3 273 507 B1**
(45) Veröffentlichungstag und Bekanntmachung des Hinweises auf die Patenterteilung: **09.09.2020**
(21) Anmeldenummer: 17180257.2
(22) Anmeldetag: 07.07.2017
(51) Int. Cl.: B60L 58/10, B60L 58/12, H01M 2/20, H01M 2/34, H01M 10/42, H01M 10/48, B60L 58/21, B60L 50/64

(54) **TRAKTIONSENERGIESPEICHERSYSTEM FÜR EIN FAHRZEUG**
TRACTION ENERGY STORAGE SYSTEM FOR A VEHICLE
SYSTÈME ACCUMULATEUR D'ÉNERGIE DE TRACTION POUR VÉHICULE

(30) Priorität: 23.07.2016 DE 102016008978
(43) Veröffentlichungstag der Anmeldung: 24.01.2018
(73) Patentinhaber: MAN Truck & Bus SE, 80995 München (DE)
(72) Erfinder: Kratzer, Sebastian, 80997 München (DE)
(74) Vertreter: v. Bezold & Partner Patentanwälte - PartG mbB

(56) Entgegenhaltungen:
- EP-A1- 2 993 724
- DE-A1-102011 113 798
- DE-T5-112011 105 344
- US-A1- 2013 221 919

## Beschreibung

Die Erfindung betrifft ein Traktionsenergiespeichersystem für ein Fahrzeug, beispielsweise ein Nutzfahrzeug.

Die zumindest teilweise Elektrifizierung des Antriebsstrangs eines Fahrzeugs ist kostenintensiv. Zu den Kosten tragen die Entwicklung und die Erprobung des Energiespeichers wesentlich bei. Durch die Zahl verschiedener Anwendungsfälle und den damit verbundenen Entwicklungs- und Erprobungsaufwand vervielfachen sich die Kosten. Die Zahl der Anwendungsfälle ist durch mehrere Faktoren bestimmt. Zum einen besteht oftmals der Wunsch, eine möglichst große Anzahl von Fahrzeugderivaten zu elektrifizieren. Zum anderen besteht bei jedem Fahrzeugderivat regelmäßig Bedarf nach unterschiedlichen Elektrifizierungsgraden, beispielsweise einem Batterie-Elektrofahrzeug (BEV), einem Plug-in-Hybridfahrzeug (PHEV) und einem Hybrid-Elektrofahrzeug (HEV).

Das Dokument DE 10 2010 002 939 A1 beschreibt einen herkömmlichen Energiespeicher. Der Energiespeicher umfasst eine Vielzahl einzelner Speicherzellen, wobei Gruppen von Speicherzellen jeweils zu einem Speichermodul und die Speichermodule zum Energiespeicher verschaltet sind.

Das Dokument US 2007/0080662 A1 beschreibt einen weiteren herkömmlichen Energiespeicher, der über die Leistungsverschaltung hinaus einen Datenbus aufweist. Der Datenbus verbindet Modulsteuerungen an den einzelnen Zellmodulen mit einer Steuerung des Energiespeichers.

Das Dokument DE 10 2007 038 532 A1 beschreibt einen als Batteriepack bezeichneten Energiespeicher mit mehreren miteinander verbundenen Zellen, die jeweils eine Spannung bereitstellen. Einer oder mehreren Zellen ist eine Überwachungsschaltung zugeordnet. Eine Kopplungsanordnung stellt auf Grundlage der Überwachungsschaltungen ein von den Zellen galvanisch getrenntes Zustandssignal bereit.

Um der Vielzahl verschiedener Anwendungsfälle gerecht zu werden, muss der herkömmliche Energiespeicher hinsichtlich der Anzahl seiner Zellmodule, der Steuerung des Energiespeichers und seiner Eigensicherheit für jeden Anwendungsfall entwickelt und erprobt werden.

Wachsende Anforderungen an die gespeicherte Traktionsenergie, insbesondere für Nutzfahrzeuge, erfordern eine größere Anzahl an Zellmodulen, so dass sich deren Ausfallwahrscheinlichkeit erhöht. Da der Ausfall eines einzelnen Zellmoduls den Austausch des gesamten Energiespeichers erfordert, kann der Einsatz herkömmlicher Energiespeicher bei Nutzfahrzeugen mit einem erhöhten Ausfallrisiko und zusätzlichen Wartungskosten verbunden sein.

Das Dokument EP 2 993 724 A1 beschreibt ein Batteriemanagement für ein großes Elektrofahrzeug, dessen Antriebssteuerung einen Fahrzeugrechner mit einer Sortiersteuerung umfasst. Mehrere konfigurierbare Energiespeicher sind parallel geschaltet. Jeder konfigurierbare Energiespeicher enthält mehrere Batteriemodule in Reihenschaltung. Zunächst berechnet der Fahrzeugrechner eine Anzahl benötigter Batteriemodule und eine Anzahl benötigter konfigurierbarer Energiespeicher. Anschließend berechnet die Sortiersteuerung Modulwerte aller Batteriemodule und erzeugt ein Batteriemodul-Sortierergebnis. Die Sortiersteuerung aktiviert dann die benötigte Anzahl von Batteriemodulen entsprechend dem Sortierergebnis des Batteriemoduls. Anschließend berechnet die Sortiersteuerung einen Energiespeicherwert und erzeugt ein Energiespeicher-Sortierergebnis. Anschließend bewirkt die Sortiersteuerung den Ruhezustand mindestens eines konfigurierbaren Energiespeichers im letzten Rang des Energiespeicher-Sortierergebnisses.

Das Dokument DE 10 2011 113 798 A1 beschreibt eine Batterie, deren Komponenten keine erhöhten und damit potentiell gefährlichen Spannungen z. B. über 36 oder 48 V aufweisen. Die benötigten hohen Spannungen z. B. bis zu 750 V und Ströme werden nur dann bereitgestellt, wenn ein ordnungsgemäßer Betriebszustand gegeben ist. Im Ruhe- oder Wartungszustand sowie bei Störungen oder Unfällen sind potentiell gefährliche Spannungen oder Ströme weder am Batterieausgang noch innerhalb der Batterie anzutreffen.

Das Dokument DE 11 2011 105 344 T5 betrifft den Betrieb eines Fahrzeugs. Einzelne Zellen werden geladen oder entladen. Ein Ausgleichen der Hochspannungsbatterien tritt auch dynamisch während des normalen Fahrzeugbetriebs auf.

Das Dokument DE 10 2014 200 096 A1 beschreibt ein Batteriesystem mit einer nachladbaren, eine Mehrzahl von Batteriezellen umfassenden Batterie und einem entsprechenden Batteriemanagementsystem zum Überwachen und Regeln des Betriebs der Batterie.

Das Dokument US 2013/0221919 A1 beschreibt ein Batteriemanagementsystem mit mehreren Subsystemblöcken, einer Ladeeinheit eines Energiespeichermasters und mehrere Systemen aus Batteriebündeln. Der Energiespeichermaster kann mit der Fahrzeugsteuerung über einen CAN-Bus zu einer externen Ladeeinheit verbunden werden. Jedes Batteriemodul innerhalb eines Batteriebündels kann eine lokale Moduleinheit beinhalten, die mit einem Bündelmaster kommunizieren kann. Der Bündelmaster kann mit dem Energiespeichermasters kommunizieren und von diesem gesteuert werden. Gruppen von Batteriezellen werden überwacht und weiterer Informationen über die Zellgruppen werden erfasst. Abstrakte Informationen von jeder Zellgruppe werden verarbeitet und an einen Fahrzeugladeregler weitergeleitet. Ein integriertes Batteriemanagementsystem (BMS) kann Zellenüberwachung, Temperaturüberwachung, Zellenausgleich, Strangstromüberwachung und Integration der Ladesteuerung ermöglichen.

Somit ist eine Aufgabe der Erfindung, eine Technik zur fahrzeugangepassten Speicherung von Traktionsenergie bereitzustellen, deren Nutzungsdauer nicht durch einzelne Zellmodule oder eine Teilmenge der Zellmodule begrenzt wird. Eine weitere oder alternative Aufgabe der Erfindung ist, eine fahrzeugangepassten Speicherung von Traktionsenergie bereitzustellen, die eine gleichmäßige Nutzung vieler Zellmodule ermöglicht.

Diese Aufgaben werden durch ein Traktionsenergiespeichersystem für ein Fahrzeug mit den Merkmalen des Anspruchs 1 gelöst.

Gemäß einem Aspekt umfasst ein Traktionsenergiespeichersystem mehrere elektrische Energiespeicher. Jeder der Energiespeicher umfasst mehrere über Stromschienen elektrisch verbundene Zellmodule, ein oder mehrere Schaltschütze und eine Energiespeichersteuerung zum Steuern der Zellmodule und des Schaltschützes oder der Schaltschütze. Jedes der Zellmodule umfasst mehrere Speicherzellen und eine Zellmodulsteuerung. In jedem Energiespeicher ist das Schaltschütz oder sind die Schaltschütze dazu ausgebildet, die Stromschienen des Energiespeichers mit einer Energiespeicherhochvoltschnittstelle des jeweiligen Energiespeichers nach Vorgabe der Energiespeichersteuerung in einer Schließstellung des Schaltschützes oder der Schaltschütze zu verbinden und in einer Offenstellung des Schaltschützes oder der Schaltschütze zu trennen. Die Energiespeicherhochvoltschnittstellen der Energiespeicher sind im Traktionsenergiespeichersystem parallel geschaltet. Eine mit den Energiespeichersteuerungen in Wirkverbindung stehende Systemsteuerung ist dazu ausgebildet, die Schließstellung der Schaltschütze aller Energiespeicher in einem Betriebszustand des Traktionsenergiespeichersystems zu bewirken, die Schließstellung der Schaltschütze von mindestens zwei der Energiespeicher in einem Nachlaufzustand des Traktionsenergiespeichersystems zu bewirken und die Offenstellung der Schaltschütze aller Energiespeicher in einem Ruhezustand des Traktionsenergiespeichersystems zu bewirken.

Durch die geschlossenen Schaltschütze sind im Nachlaufzustand die mindestens zwei Energiespeicher über ihre parallel geschalteten Energiespeicherhochvoltschnittstellen zum Ladungsaustausch verbunden, so dass eine im Betriebszustand entstandene Ungleichheit der Energiespeicherzustände (beispielsweise Leerlaufspannungsdifferenzen oder Ruhespannungsdifferenzen zwischen den Energiespeichern) ausgeglichen werden kann. Die Energiespeicherzustände der mindestens zwei Energiespeicher können vor dem Ruhezustand und/oder in Vorbereitung des nächsten Betriebszustands ausgeglichen werden.

Der Ladungsaustausch im Nachlaufzustand kann unterschiedliche Energiespeicherzustände, die beispielsweise mit der wachsenden Anzahl an Zellmodulen einer Streuungen unterliegen, zur Verlängerung der Nutzungsdauer des gesamten Traktionsenergiespeichersystem angleichen. So können herstellungsbedingte Unterschiede hinsichtlich Entladekurve, Innenwiderstand oder Relaxationszeit kompensiert werden.

Ferner können die Energiespeicher jeweils zum internen Ladungsausgleich zwischen den Zellmodulen des jeweiligen Energiespeichers ausgebildet sein, beispielsweise über die Stromschienen und/oder gesteuert durch die Energiespeichersteuerungen und Zellmodulsteuerungen. Die Zellmodule innerhalb jedes Energiespeichers können in Reihe oder parallel geschaltet sein.

Die im Betriebszustand bewirkte Schließstellung der Schaltschütze aller Energiespeicher kann, muss jedoch nicht, alle Schaltschütze aller Energiespeicher betreffen. Die Schließstellung kann das eine Schaltschütz oder die mehreren Schaltschütze betreffen, das beziehungsweise die beim jeweiligen Energiespeicher für den Betriebszustand vorgesehen sind und/oder für eine reguläre Leistungsabgabe notwendig ist. Beispielsweise können die Energiespeicher weitere Schaltschütze umfassen, deren Schließstellung in einer Messphase und/oder einem Testbetrieb bewirkt wird. Entsprechendes kann für die im Ruhezustand bewirkte Offenstellung gelten.

Um die Schließstellung im Nachlaufzustand zu bewirken, können die Schaltschütze der mindestens zwei Energiespeicher geschlossen werden oder (beispielsweise vom Betriebszustand kommend) geschlossen bleiben. Die mindestens zwei Energiespeicher können eine erste (z. B. echte) Teilmenge aller Energiespeicher sein. Die erste Teilmenge kann eine gerade Anzahl an Energiespeichern umfassen. Die Energiespeicher können paarweise zum Ladungsausgleich durch die Schließstellung ihrer Schaltschütze verbunden sein.

Die Schaltschütze einer zweiten (z. B. zur ersten Teilmenge komplementären) Teilmenge aller Energiespeicher kann im Nachlaufzustand geöffnet werden. Die Schaltschütze der zweiten Teilmenge können während des gesamten Nachlaufzustands und/oder im Ruhezustand in der Offenstellung sein.

Der Nachlaufzustand kann sich an den Betriebszustand anschließen. Der Ruhezustand kann sich an den Nachlaufzustand anschließen. Die Systemsteuerung kann zum Steuern der Energiespeichersteuerungen ausgebildet sein. Die Systemsteuerung kann dazu ausgebildet sein, die Offenstellung und die Schließstellung der Schaltschütze mittels der jeweiligen Energiespeichersteuerung zu bewirken. Die Systemsteuerung kann ferner dazu ausgebildet sein, im Nachlaufzustand die Energiespeichersteuerungen der Energiespeicher der zweiten Teilmenge und/oder im Ruhezustand alle Energiespeichersteuerungen in einen Ruhezustand zu versetzen.

Das Schaltschütz kann dazu ausgebildet sein, die Energiespeicherhochvoltschnittstelle des Energiespeichers in der Schließstellung mit den untereinander verschalteten Zellmodulen zu verbinden und in der Offenstellung von diesen zu trennen. Die Stromschienen jedes Energiespeichers können jeweils eine Minusschiene und eine gegenüber der Minusschiene potentialhöhere Plusschiene umfassen. Die Energiespeicherhochvoltschnittstellen können jeweils einen Minuspol und einen Pluspol umfassen. Die Stromschienen können in der Schließstellung mit der Energiespeicherhochvoltschnittstelle verbunden sein, indem die Plusschiene und die Minusschiene mit dem Pluspol bzw. dem Minuspol verbunden sind. Die Stromschienen können in der Offenstellung von der Energiespeicherhochvoltschnittstelle getrennt sein, indem die Plusschiene vom Pluspol getrennt ist, beispielsweise bei mit dem Minuspol verbundener Minusschiene.

Die Energiespeicherhochvoltschnittstellen können außerhalb der Energiespeicher und/oder innerhalb des Traktionsenergiespeichersystems parallel geschaltet sein, beispielsweise durch eine Verkabelung der Energiespeicher des Traktionsenergiespeichersystems. Die Parallelschaltung der Energiespeicherhochvoltschnittstellen kann in allen Zuständen (beispielsweise im Betriebszustand, im Nachlaufzustand und/oder im Ruhezustand) des Traktionsenergiespeichersystems bestehen.

Das Fahrzeug kann ein Landfahrzeug, ein Wasserfahrzeug (beispielsweise ein Schiff oder Unterseeboot) oder ein Luftfahrzeug sein. Alternativ oder in Kombination kann das Fahrzeug ein Nutzfahrzeug (beispielsweise ein Lastkraftwagen zur Güterbeförderung und/oder ein Bus zur Personenbeförderung) oder ein Personenkraftwagen sein.

Die parallel geschalteten Energiespeicherhochvoltschnittstellen können ferner zum Energieaustausch mit dem Fahrzeug verbunden sein. Ein Leistungsnetz (beispielsweise eine Hochvoltverteilungseinheit) des Fahrzeugs kann mit den parallel geschalteten Energiespeicherhochvoltschnittstellen verbunden sein. Der Energieaustausch kann auf den Betriebszustand beschränkt sein. Ein Stromfluss zwischen Traktionsenergiespeichersystem und Fahrzeug kann im Nachlaufzustand und/oder im Ruhezustand unterbrochen sein. Das Leistungsnetz (beispielsweise die Hochvoltverteilungseinheit) des Fahrzeugs kann den Stromfluss im Nachlaufzustand und/oder im Ruhezustand unterbrechen.

Alternativ oder ergänzend können die Energiespeicherhochvoltschnittstellen ausschließlich zum Ladungsaustausch zwischen den Energiespeichern im Nachlaufzustand ausgebildet sein. In diesem Fall kann jeder Energiespeicher eine weitere Energiespeicherhochvoltschnittstelle umfassen, die (vorzugsweise ausschließlich) zum Energieaustausch mit dem Fahrzeug ausgebildet ist. Auch diese weiteren Energiespeicherhochvoltschnittstellen können parallel geschaltet sein, beispielsweise durch eine Verkabelung der Energiespeicher des Traktionsenergiespeichersystems.

Die Systemsteuerung kann ferner dazu ausgebildet sein, Signale von den Energiespeichersteuerungen zu erhalten. Die Signale können jeweils einen Energiespeicherzustand des jeweiligen Energiespeichers angeben.

Die Energiespeicherzustände können für eine Obermenge der mindestens zwei Energiespeicher (d. h. eine Obermenge der ersten Teilmenge) erhalten werden. Beispielsweise kann von allen Energiespeichern jeweils ein Energiespeicherzustand erhalten werden.

Die Systemsteuerung kann ferner dazu ausgebildet sein, für eine Messphase des Nachlaufzustands die Offenstellung der Schaltschütze der Energiespeicher zu bewirken. Alternativ oder ergänzend kann in der Messphase bei geschlossenen Schaltschützen der Energiespeicherzustand aufgrund eines Zustands eines oder einzelner Zellmodule im jeweiligen Energiespeicher geschätzt werden. Beispielsweise kann eine Leerlaufspannung des Energiespeichers auf Basis eines Zellmoduls (beispielsweise einer Leerlaufspannung des Zellmoduls) im Energiespeicher geschätzt werden.

Die Messphase kann ein Zeitintervall (z. B. direkt am Anfang des Nachlaufzustands) oder mehrere Zeitintervalle im Nachlaufzustand umfassen. Die jeweilige Energiespeichersteuerung kann eine Leerlaufspannung (z. B. an den lastfreien Stromschienen) erfassen. Die erhaltenen Energiespeicherzustände können auf einer in der Messphase gemessenen Leerlaufspannung des jeweiligen Energiespeichers basieren.

Die Offenstellung der Schaltschütze in der Messphase kann für die Energiespeicher der Obermenge bewirkt werden. Beispielsweise können alle Energiespeicher gemessen werden. Die Energiespeicher können zeitgleich (beispielsweise in einem Zeitintervall) oder sequentiell (beispielsweise in den mehren Zeitintervallen) gemessen werden. Die Offenstellung kann für die Dauer der Messphase bewirkt sein.

Der Energiespeicherzustand kann einen Ladezustand (auch als "State of Charge" oder SoC bezeichnet) und/oder eine Leerlaufspannung (auch als "Open Circuit Voltage" oder OCV bezeichnet) umfassen. Alternativ oder ergänzend kann der Energiespeicherzustand von einem zeitlichen Relaxationsverlauf der Leerlaufspannung (beispielsweise während der Messphase) abhängen. Alternativ oder ergänzend kann der Energiespeicherzustand von einer Temperatur und/oder einer zeitlich integrierten Stromentnahme abhängen.

Die Systemsteuerung kann die Schließstellung der Schaltschütze der mindestens zwei Energiespeicher im Nachlaufzustand nach Ablauf der Messphase bewirken. Die Systemsteuerung kann ferner dazu ausgebildet sein, abhängig von den erhaltenen Energiespeicherzuständen einen Bedarf zum Ladungsausgleich für die Energiespeicher zu bestimmen.

Die Schließstellung der Schaltschütze kann für diejenigen Energiespeicher bewirkt werden, deren Energiespeicherzustand einen Ladungsausgleich indiziert. Die Systemsteuerung kann die mindestens zwei Energiespeicher (d. h. die erste Teilmenge) abhängig vom jeweiligen Bedarf des Ladungsausgleichs bestimmen.

Der Bedarf (und damit die erste Teilmenge) kann für jene Energiespeicher festgestellt werden, deren Energiespeicherzustand (z. B. signifikant) von einem durchschnittlichen Energiespeicherzustand aller Energiespeicher abweicht. Die Abweichung kann durch eine prozentuale Abweichung des Energiespeicherzustands und/oder eine Perzentile einer Verteilung der erhaltenen Energiespeicherzustände bestimmt sein.

Die Systemsteuerung kann dazu ausgebildet sein, den Energiespeicherzustand und/oder einen Stromfluss der mindestens zwei Energiespeicher während der Schließstellung oder des Nachlaufzustands regelmäßig (z. B. periodisch) zu überwachen. Die Systemsteuerung kann ferner dazu ausgebildet sein, die Offenstellung der Schaltschütze der mindestens zwei Energiespeicher zu bewirken, wenn einer der überwachten Energiespeicherzustände einem fehlerhaften Energiespeicher entspricht und/oder der überwachte Stromfluss größer als ein vorgegebener Maximalstrom ist.

Die Systemsteuerung kann dazu ausgebildet sein, den Nachlaufzustand zu beenden und/oder den Ruhezustand des Traktionsenergiespeichersystems zu beginnen, wenn eine vorgegebene Differenz der Energiespeicherzustände unterschritten ist und/oder eine vorgegebene Zeitdauer im Nachlaufzustand vergangen ist.

Die Systemsteuerung kann ferner dazu ausgebildet sein, Fahrzeuganweisungen (z. B. eine Datenabfrage oder eine Steuerungsanweisungen) vom Fahrzeug zu erhalten. Der Erhalt einer Einschaltanweisung kann den Betriebszustand einleiten. Der Erhalt einer Abschaltanweisung kann den Nachlaufzustand einleiten. Beispielsweise kann der Erhalt der Abschaltanweisung die Offenstellung der Schaltschütze aller Energiespeicher und/oder den Beginn der Messphase innerhalb des Nachlaufzustands bewirken.

Das Traktionsenergiespeichersystem kann ferner eine Systemhochvoltschnittstelle und/oder ein Systemschaltschütz umfassen. Die Systemhochvoltschnittstelle ist mit dem Fahrzeug elektrisch verbunden oder verbindbar, beispielsweise mit einem Antriebsstrang des Fahrzeugs. Das Systemschaltschütz ist dazu ausgebildet, die parallel geschalteten Energiespeicherhochvoltschnittstellen mit der Systemhochvoltschnittstelle nach Vorgabe der Systemsteuerung (in einer Schließstellung des Systemschaltschützes) zu verbinden und (in einer Offenstellung des Systemschaltschützes) zu trennen. Die Systemsteuerung kann die Schließstellung des Systemschaltschützes im Betriebszustand und/oder die Offenstellung des Systemschaltschützes im Nachlaufzustand bewirken. Die Systemsteuerung kann ferner dazu ausgebildet sein, im Ruhezustand die Offenstellung des Systemschaltschützes zu bewirken.

Jede der Zellmodulsteuerungen kann dazu ausgebildet sein, die Speicherzellen im jeweiligen Zellmodul betreffende Messwerte auszugeben. Jede der Energiespeichersteuerungen kann dazu ausgebildet sein, die Messwerte von den Zellmodulen im jeweiligen Energiespeicher zu erhalten und abhängig von den erhaltenen Messwerten ein Signal zu erzeugen. Die Systemsteuerung kann dazu ausgebildet sein, die Signale von den Energiespeichersteuerungen zu erhalten. Das Signal der Energiespeichersteuerung kann den jeweiligen Energiespeicherzustand angeben, beispielsweise im Nachlaufzustand.

Eine der Energiespeichersteuerungen kann die Funktion der Systemsteuerung ausführen. Diese eine Energiespeichersteuerung kann auch als Master-Energiespeichersteuerung bezeichnet werden. Jede weitere Energiespeichersteuerung des Traktionsenergiespeichersystems kann auch als Slave-Energiespeichersteuerung bezeichnet werden.

Die Funktion der Systemsteuerung kann in jeder der Energiespeichersteuerungen implementiert sein und in einer der Energiespeichersteuerungen zur Ausführung aktiviert sein. Die Funktion der Systemsteuerung kann in nur einer der Energiespeichersteuerungen zur Ausführung aktiviert sein. In allen anderen Energiespeichersteuerungen kann die Funktion der Systemsteuerung deaktiviert sein. Jede der Energiespeichersteuerungen kann dazu ausgebildet sein, in einem ersten Energiespeicherbetriebszustand die Funktion auszuführen und in einem zweiten Energiespeicherbetriebszustand die Funktion nicht auszuführen.

Jeder der Energiespeicher kann ferner eine erste Datenschnittstelle und eine von der ersten Datenschnittstelle verschiedene zweite Datenschnittstelle umfassen. Die Datenschnittstellen können jeweils innerhalb des Energiespeichers mit der Energiespeichersteuerung verbunden sein.

Bei jenen Energiespeichern, welche nicht die Funktion der Systemsteuerung ausführen, kann die erste Datenschnittstelle außerhalb des Energiespeichers unverbunden sein oder entfallen. Alternativ oder ergänzend kann bei jenen Energiespeichern die zweite Datenschnittstelle zur Ausgabe des Signals mit der zweiten Datenschnittstelle des Energiespeichers verbunden sein, welcher die Funktion der Systemsteuerung ausführt.

Bei jenem Energiespeicher, welcher die Funktion der Systemsteuerung ausführt, kann die erste Datenschnittstelle außerhalb des Energiespeichers mit dem Fahrzeug verbunden sein zur Ausgabe eines Systemsignals. Alternativ oder ergänzend kann die zweite Datenschnittstelle jenes Energiespeichers zum Erhalt der Signale mit den zweiten Datenschnittstellen der Energiespeicher verbunden sein, welche nicht die Funktion der Systemsteuerung ausführen. Die zweiten Datenschnittstellen aller Energiespeicher können an einen gemeinsamen Datenbus angeschlossen sein.

Die Systemsteuerung kann dazu ausgebildet sein, den Nachlaufzustand (beispielsweise Beginn und/oder Ende des Nachlaufzustands) als das Systemsignal auszugeben. Alternativ oder ergänzend kann die Systemsteuerung dazu ausgebildet sein, die erhaltenen Signale zum Systemsignal zu aggregieren und das aggregierte Systemsignal auszugeben, z. B. im Betriebszustand des Traktionsenergiespeichersystems.

Die Aggregation der mehreren Signale zu einem Systemsignal durch die Systemsteuerung kann eine einheitliche Signalausgabe (oder Kommunikation) gegenüber dem Fahrzeug ermöglichen. Beispielsweise können verschiedene Fahrzeugderivate und/oder Fahrzeuge mit unterschiedlichen Elektrifizierungsgraden des Antriebsstrangs eine einheitliche Kommunikationsschnittstelle zum Traktionsenergiespeichersystem nutzen.

Ein Aufbau der fahrzeugseitigen Kommunikationsschnittstelle und ein Protokoll der fahrzeugseitigen Kommunikation des Traktionsenergiespeichersystems können für verschiedenen Anwendungsfällen gleich sein. Die Anwendungsfälle können sich hinsichtlich Anzahl und Verschaltung der Energiespeicher unterscheiden sein. Die Anzahl und die Verschaltung der Energiespeicher kann an einen Energie- und Leistungsbedarf des Fahrzeugs angepasst werden, ohne die fahrzeugseitige Kommunikation anzupassen.

Das hierarchisch strukturierte Traktionsenergiespeichersystem mit Energiespeichern auf einer Hierarchieebene und Zellmodulen auf einer darunterliegenden Hierarchieebene kann einen Ladungsausgleich ermöglichen, dessen Zeitdauer nicht oder nicht linear mit der Anzahl der Zellmodule zunimmt. Beispielsweise kann jede Energiespeichersteuerung dazu ausgebildet sein, auf Grundlage der von den Zellmodulsteuerungen erhaltenen Messwerte einen ersten Ladungsausgleich zwischen den Zellmodulen zu bewirken. Nach Abschluss des ersten Ladungsausgleichs kann die Systemsteuerung einen zweiten Ladungsausgleich zwischen den Energiespeichern im Nachlaufzustand bewirken. Ferner kann der hierarchische Aufbau die Wartung und/oder die Reparatur vereinfachen. Beispielsweise kann das Systemsignal eine Meldung enthalten. Die Meldung kann eine Fehlermeldung, Warnmeldung oder Diagnosemeldung sein.

Die Diagnosemeldung kann aufgrund der von den einzelnen Energiespeichern erhaltenen Signale einen einzelnen Energiespeicher angeben. Beispielsweise kann einer der Energiespeicher als fehlerhaften oder gealtert angegeben sein. Ferner kann die Diagnosemeldung aufgrund zellmodul-spezifischer Messwerte ein einzelnes Zellmodul (beispielsweise als fehlerhaft oder gealtert) angeben. Dies ist vorteilhaft, falls eine nutzbare Leistung des Traktionsenergiespeichersystems vom leistungsschwächsten Energiespeicher oder Zellmodul abhängt. Durch einen gezielten Austausch des angegebenen Energiespeichers oder Zellmoduls kann die Leistungsfähigkeit des Traktionsenergiespeichersystem zeit- und kosteneffektiv wiederhergestellt werden.

Die Energiespeichersteuerung jedes Energiespeichers kann mit den jeweiligen Zellmodulsteuerungen desselben Energiespeichers zum Datenaustausch verbunden sein, beispielsweise über einen seriellen Datenbus. Die Messwerte können eine Spannung (z. B., eine Modulspannung aller Speicherzellen) und/oder eine Temperatur (z. B. eine Modultemperatur, einen Temperaturmittelwert oder ein Temperaturmaximum) der Zellmodule angeben.

Jede Zellmodulsteuerung kann dazu ausgebildet sein, die Messwerte zu erfassen und/oder an die jeweils verbundene Energiespeichersteuerung auszugeben. Die Zellmodulsteuerung kann an zumindest einer der jeweiligen Speicherzellen angrenzend oder anliegend angeordnet sein. Sensoren zur Erfassung der Messwerte können in der Zellmodulsteuerung angeordnet sein.

Jede Energiespeichersteuerung kann dazu ausgebildet sein, auf Grundlage der von den jeweiligen Zellmodulen erhaltenen Messwerte, das Signal zu erzeugen. Alternativ oder ergänzend kann die Energiespeichersteuerung dazu ausgebildet sein, weitere Messwerte zu erfassen (z. B. die Leerlaufspannung des Energiespeichers oder einen vom Energiespeicher abgegebenen Strom), und auf deren Grundlage das Signal (z. B. den Energiespeicherzustand) zu erzeugen.

Die Signale und/oder das Systemsignal können einen Messwert, einen Zustandswert oder einen Diagnosewert angeben. Das Aggregieren der Signale zum Systemsignal kann eine Mittelwertbildung, eine Minimumbestimmung und/oder eine Maximumbestimmung umfassen.

Die Systemsteuerung kann zur bidirektionalen Kommunikation mit dem Fahrzeug ausgebildet sein. Die Systemsteuerung kann dazu ausgebildet sein, ein Fahrzeugsignal zu erhalten. Die Systemsteuerung kann das Fahrzeugsignal analysieren und abhängig von der Analyse ein Steuersignal an mindestens eine der Energiespeichersteuerungen ausgeben. Das Fahrzeugsignal kann eine Steuerungsanweisung (z. B. die Fahrzeuganweisung) und/oder eine Zustandsabfrage umfassen.

Die Systemsteuerung kann dazu ausgebildet sein, über die erste Datenschnittstelle ein Notabschaltsignal vom Fahrzeug zu erhalten. Die Systemsteuerung kann ferner dazu ausgebildet sein, beim Erhalt des Notabschaltsignals ein Steuersignal zur Trennung der Schaltschütze an die Energiespeichersteuerungen zu senden.

Die Signale können den Energiespeicherzustand des jeweiligen Energiespeichers angeben. Das aggregierte Systemsignal kann einen Systemzustand des Traktionsenergiespeichersystems angeben. Ein Datenformat zur Angabe des Zustands, eine physikalische Definition der jeweils genutzten Datenschnittstelle und/oder ein Kommunikationsprotokoll kann für die Signale und das aggregierte Systemsignal übereinstimmend sein.

Der Energiespeicherzustand und der Systemzustand können einen gegenwärtigen Zustand des jeweiligen Energiespeichers bzw. des Traktionsenergiespeichersystems angeben. Alternativ oder ergänzend kann der Energiespeicherzustand und der Systemzustand eine (z. B. prognostizierte) Leistungsfähigkeit des jeweiligen Energiespeichers bzw. des Traktionsenergiespeichersystems angeben. Die Signale der Energiespeichersteuerungen können einen gegenwärtigen Ladezustand und/oder einen (z. B. zukünftig entnehmbaren) Maximalstrom des jeweiligen Energiespeichers angeben. Der Ladezustand kann, beispielsweise mittels einer tabellierten Ladekurve, aus der gemessenen Spannung (z. B. der Leerlaufspannung) bestimmt werden. Der entnehmbare Maximalstrom kann, beispielsweise mittels einer tabellierten Funktion, aus dem Ladezustand und/oder der gemessenen Temperatur bestimmt werden. Jede die Funktion der Systemsteuerung nicht ausführende Energiespeichersteuerung kann ein eigenes Signal (z. B. mit einem eigenen Datensatz und/oder mittels eines eigenen Datagramms) an die die Funktion der Systemsteuerung ausführende Energiespeichersteuerung ausgeben.

Die Energiespeichersteuerungen können jeweils dazu ausgebildet sein, den Energiespeicherzustand des jeweiligen Energiespeichers festzustellen auf Grundlage der von den Zellmodulen erhaltenen Messwerte und/oder den weiteren Messwerten. Die Energiespeichersteuerung kann ferner dazu ausgebildet sein, bei Feststellung eines unzulässigen Energiespeicherzustands das jeweilige Schaltschütz zu trennen und/oder eine Fehlermeldung als das Signal zu erzeugen und an die Systemsteuerung auszugeben. Das Signal der betreffenden Energiespeichersteuerung kann den unzulässigen Energiespeicherzustand benennen und/oder die Unzulässigkeit als solche angeben.

Die Feststellung des Energiespeicherzustands kann ein Messen des durch den jeweiligen Energiespeicher abgegebenen Stroms umfassen. Der unzulässige Energiespeicherzustand kann bei Überschreiten des entnehmbaren Maximalstroms festgestellt werden. Alternativ oder ergänzend können die Signale jeweils den entnehmbaren Maximalstrom des jeweiligen Energiespeichers angeben. Das aggregierte Systemsignal kann das n-Fache des Kleinsten der signalisierten entnehmbaren Maximalströme angeben. Der Faktor n kann die Anzahl der Energiespeicher sein, optional nach Abzug der Zahl jener Energiespeicher, für die ein unzulässiger Energiespeicherzustand festgestellt oder signalisiert ist.

Die Feststellung des Zustands kann ein Bestimmen des Ladezustands des jeweiligen Energiespeichers oder einer dem jeweiligen Energiespeicher entnehmbaren Ladung umfassen. Der unzulässige Energiespeicherzustand kann bei Unterschreiten einer Mindestladung festgestellt werden. Die erzeugten Signale können jeweils den Ladezustand oder die entnehmbare Ladung des jeweiligen Energiespeichers angeben. Der Systemzustand kann die Summe der signalisierten entnehmbaren Ladungen angeben.

Die entnehmbare Ladung kann durch zeitliche Integration des Stroms bestimmt werden. Alternativ oder ergänzend kann die entnehmbare Ladung aufgrund der gemessenen Spannung mittels einer tabellierten Funktion bestimmt werden.

Jeder Energiespeicher kann einen Schutzleiterkontakt umfassen. Der Schutzleiterkontakt kann mit einer Karosserie des Fahrzeugs verbunden oder verbindbar sein. Die Feststellung des Zustands kann ein Messen des Isolationswiderstands zwischen einem Pol (oder beiden Polen) der Energiespeicherhochvoltschnittstelle und dem Schutzleiterkontakt des jeweiligen Energiespeichers umfassen. Der unzulässige Energiespeicherzustand kann bei Unterschreiten eines Isolationswiderstandswerts festgestellt werden.

Jeder der Energiespeicher kann in einem eigenen Gehäuse angeordnet sein. In einer oder mehreren Außenflächen des Gehäuses kann mindestens eines der folgenden Merkmale angeordnet sein: die erste Datenschnittstelle, die zweite Datenschnittstelle, die Energiespeicherhochvoltschnittstelle und der Schutzleiterkontakt.

Gemäß weiteren Aspekten sind ein Fahrzeug, beispielsweise ein Nutzfahrzeug, mit einem solchen Traktionsenergiespeichersystem und ein Verfahren zur Herstellung eines Fahrzeugs, beispielsweise eines Nutzfahrzeugs, mit dem Einbau eines solchen Traktionsenergiespeichersystems bereitgestellt.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: ein schematisches Blockschaltbild eines ersten Ausführungsbeispiels eines Traktionsenergiespeichersystems für ein Fahrzeug;
- Figur 2: ein schematisches Blockschaltbild eines zweiten Ausführungsbeispiels eines Traktionsenergiespeichersystems für ein Fahrzeug;
- Figur 3: ein schematisches Blockschaltbild eines dritten Ausführungsbeispiels eines Traktionsenergiespeichersystems für ein Fahrzeug;
- Figur 4: ein funktionales Blockdiagramm einer beispielhaften Signalverarbeitung im Traktionsenergiespeichersystem, die in den Ausführungsbeispielen der Figuren 1 bis 3 implementierbar ist;
- Figur 5: ein Ablaufdiagramm eines Verfahrens zum Ladungsausgleich in einem Nachlaufzustand eines Traktionsenergiespeichersystems für ein Fahrzeug;
- Figur 6: ein funktionales Blockdiagramm einer beispielhaften Implementierung eines Nachlaufzustands in den Ausführungsbeispielen der Figuren 1 bis 4; und
- Figur 7: eine Abfolge von Offen- und Schließstellungen in einem beispielhaften Nachlaufzustand.

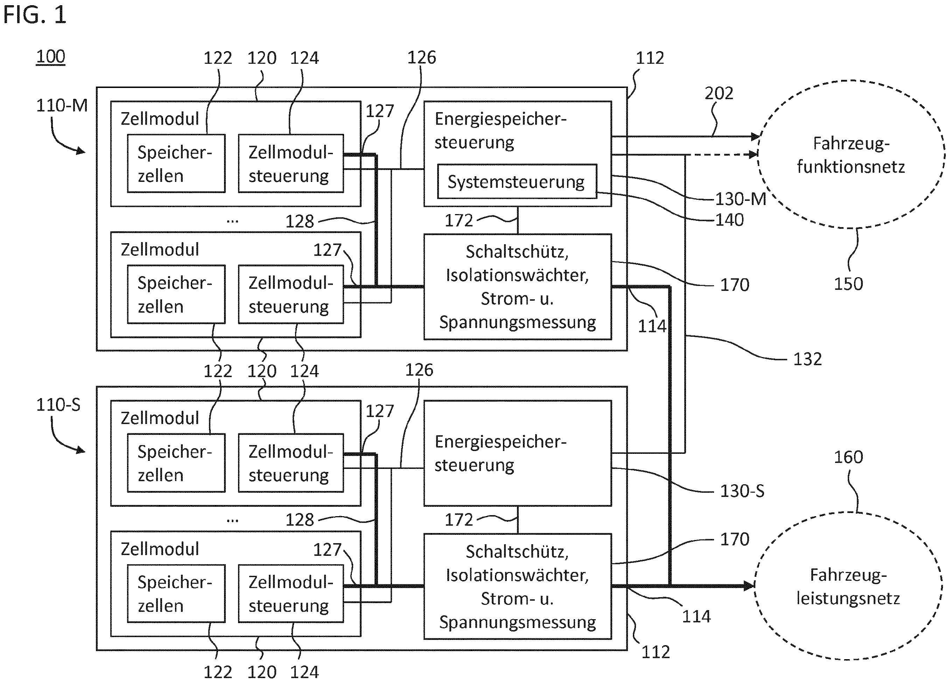

Figur 1 zeigt ein schematisches Blockschaltbild eines allgemein mit Bezugszeichen 100 bezeichneten Traktionsenergiespeichersystems (TES-Systems) für ein Fahrzeug. Das TES-System 100 umfasst mindestens zwei Energiespeicher 110. Jeder Energiespeicher 110 umfasst jeweils mehrere Zellmodule 120 und eine Energiespeichersteuerung 130.

Jedes der Zellmodule 120 umfasst mehrere Speicherzellen 122 und eine Zellmodulsteuerung 124. Jede Zellmodulsteuerung 124 erfasst Messwerte betreffend die jeweils zugeordneten Speicherzellen 122. Zum Beispiel erfasst die Zellmodulsteuerung 124 eine Spannung und/oder eine Temperatur der Speicherzellen 122 im jeweiligen Zellmodul 120. Jede der Zellmodulsteuerungen 124 ist dazu ausgebildet, die Messwerte auf einem internen Datenbus 126 auszugeben. Der interne Datenbus 126 des Zellmoduls 120 kann ein serieller Bus, beispielsweise für ein Controller Area Network (CAN), sein.

Jede der Energiespeichersteuerungen 130 ist dazu ausgebildet, die Messwerte von den Zellmodulen 120 im jeweiligen Energiespeicher 110 zu erhalten. Hierzu ist jede Energiespeichersteuerung 130 mit dem jeweiligen internen Datenbus 126 verbunden.

Jede der Energiespeichersteuerungen 130 ist ferner dazu ausgebildet, abhängig von den erhaltenen Messwerten ein Signal zu erzeugen. Zur Ausgabe des Signals oder anderer Signale sind die Energiespeichersteuerung 130 mit einem externen Datenbus 132 verbunden. Der externe Datenbus 132 des TES-Systems 100 kann ein serieller Bus sein, beispielsweise ein weiterer CAN-Bus.

Die Energiespeicher 110 sind jeweils in einem eigenen Gehäuse 112 angeordnet. Der interne Datenbus 126 verläuft innerhalb des jeweiligen Gehäuses 112. Der externe Datenbus 132 verläuft außerhalb der Gehäuse 112.

Das TES-System 100 umfasst ferner eine Systemsteuerung 140, die dazu ausgebildet ist, Signale von den Energiespeichersteuerungen 130 zu erhalten, auf Grundlage der erhaltenen Signale ein Systemsignal zu erzeugen und das Systemsignal an ein Funktionsnetz 150 des Fahrzeugs auszugeben. Das Funktionsnetz 150 kann ein Niederspannungsbordnetz und/oder ein Bussystem zur Kommunikation zwischen Fahrzeugfunktionen umfassen. Das Niederspannungsbordnetz kann eine Versorgungsspannung von 24 Volt bereitstellen.

In einer ersten Variante kann der externen Datenbus 132 ausschließlich zur Kommunikation zwischen den Energiespeichern 110 (bzw. deren Energiespeichersteuerungen 130) ausgebildet sein. Das Funktionsnetz 150 kann über eine eigene Schnittstelle und/oder eine eigene Busanbindung 202 mit der Systemsteuerung 140 verbunden sein. Hierzu kann ein eigener Bus (beispielsweise ein eigener CAN-Bus) zur Fahrzeugkommunikation vorgesehen sein, der unabhängig vom externen Datenbus 132 arbeitet.

In einer zweiten Variante kann der externe Datenbus 132 (anstelle der separaten Busanbindung 202 oder ergänzend hierzu) mit dem Funktionsnetz 150 verbunden sein (gestrichelter Pfeil).

In beiden Varianten kann das TES-System 100 eine einheitliche Fahrzeugschnittstelle zum Funktionsnetz 150 des Fahrzeugs umfassen, die unabhängig von der Anzahl der eingesetzten und miteinander verbundenen Energiespeicher 110 ist. Insbesondere bei der ersten Variante kann die Fahrzeugschnittstelle auf eine physischen Ebene (z. B. hinsichtlich Steckverbindung und/oder Signalverlauf) oder einer Bitübertragungsschicht (z. B. hinsichtlich eines Kommunikationsprotokolls) unabhängig von einer veränderlichen Zusammensetzung der vom TES-System 100 umfassten Energiespeicher 110 sein.

Die Systemsteuerung 140 kann in einem Energiespeicher 110, beispielsweise in einer der Energiespeichersteuerungen 130, implementiert sein. Alternativ oder ergänzend kann die Systemsteuerung 140 außerhalb der Energiespeicher 110 implementiert sein, beispielsweise als eine eigene Vorrichtung in einem separaten Gehäuse oder eine Komponente des Funktionsnetzes 150. Ein Energiespeicher 110, welcher die Funktion der Systemsteuerung 140 ausführt, wird auch als Master-Energiespeicher 110-M bezeichnet. Der oder die Energiespeicher 110, welche nicht die Funktion der Systemsteuerung 140 ausführen, werden auch als Slave-Energiespeicher 110-S bezeichnet. Entsprechende Bezeichnungen gelten für die jeweiligen Energiespeichersteuerungen 130-M bzw. 130-S.

Die Systemsteuerung 140 erhält die Signale von den Energiespeichersteuerungen 130-S über den externen Datenbus 132. Das Systemsignal kann von der Systemsteuerung 140 an das Funktionsnetz 150 über einen direkten Anschluss der Systemsteuerung 140 an das Funktionsnetz 150 ausgegeben werden. Alternativ oder ergänzend, wie im in Figur 1 gezeigten Ausführungsbeispiel, kann das Systemsignal an das Funktionsnetz 150 über den externen Datenbus 132 ausgegeben werden. Hierzu ist das Funktionsnetz 150 (beispielsweise direkt oder über ein Gateway) an den externen Datenbus 132 angeschlossen.

Die Speicherzellen 122 eines Zellmoduls 120 sind (beispielsweise in Reihe) zusammengeschalten. Die aus der Zusammenschaltung resultierenden Anschlussklemmen 127 sind über Stromschienen 128 verbunden. Die Stromschienen 128 können aus Aluminium oder einem anderen leitenden Material gefertigt sein.

Die aus dem Verbund der Zellmodule 120 jedes Energiespeichers 110 resultierenden Pole bilden eine Energiespeicherhochvoltschnittstelle 114 (nachfolgend: Hochvoltschnittstelle). Die Hochvoltschnittstellen 114 sind parallel oder in Reihe verschaltet und mit einem Leistungsnetz 160 des Fahrzeugs verbunden oder verbindbar. Das Leistungsnetz 160 kann ein Hochvoltbordnetz des Fahrzeugs umfassen. Ein Antriebsstrang (beispielsweise ein Kurbelwellen-Startergenerator) des Fahrzeugs kann mit dem Leistungsnetz 160 verbunden sein zur Entnahme der im TES-System 100 gespeicherten Energie und/oder zum Laden des TES-Systems 100, beispielsweise bei einem rekuperativen Bremsvorgang. Das Leistungsnetz 160 kann auch als Traktionsnetz bezeichnet werden. Das Leistungsnetz 160 kann eine Spannung von mindestens 60 Volt, beispielsweise zwischen 540 Volt und 738 Volt bereitstellen. Alternativ oder ergänzend kann das Leistungsnetz 160 jedes Hochvolt-Bordnetz im Sinne des Fahrzeugbaus sein. Eine Topologie des Leistungsnetzes 160 und/oder dessen Komponenten können das Leistungsnetz 160 gegenüber einem Niedervoltnetz (von beispielsweise 24 Volt) abgrenzen. Die Topologie kann einer bekannten Fahrzeugtopologie für Hybrid-, Plug-In- oder Elektrofahrzeuge entsprechen oder angepasst sein. Die Komponenten können einen Umrichter (oder Inverter) für Fahrantriebe, das TES-System 100, eine oder mehrere elektrische Maschinen, Nebenaggregate und/oder einen Kabelbaum umfassen.

Vorzugsweise ist in jedem Energiespeicher 110 ein oder mehrere Schaltschütze 170 zwischen den Zellmodulen 120 und dem Leistungsnetz 160 angeordnet. Das Schaltschütz 170 wird von der Energiespeichersteuerung 130 im gleichen Energiespeicher 110 über eine Steuerverbindung 172 gesteuert zum wahlweisen Trennen des jeweiligen Energiespeichers 110 vom Leistungsnetz 160. Das Schaltschütz 170 kann Teil einer Schützbox sein, die ferner die elektrische Isolation der Stromschienen 128 (z. B. gegenüber einem Referenzpotential) überwacht, den über die Stromschienen 128 fließenden Strom misst und/oder die an den Stromschienen 128 anliegende Spannung misst.

In einem Betriebszustand des TES-Systems 100 sind die Schaltschütze 170 aller (funktionsfähigen) Energiespeicher 110 geschlossen (Schließstellung). Durch Öffnen des Schaltschützes 170 kann der entsprechende Energiespeicher 110 im Betriebszustand des TES-Systems 100 aus dem Verbund des TES-Systems 100 isoliert werden, beispielsweise bei einem unzulässigen Energiespeicherzustand. Durch Öffnen des Schaltschützes 170 in einem Nachlaufzustand des TES-Systems 100 kann der entsprechende Energiespeicher 110 von einem Ladungsausgleich ausgeschlossen werden, beispielsweise falls dessen Energiespeicherzustand keine Anpassung erfordert.

Weiterhin kann ein Vorladeschaltschütz (oder kurz: Vorladeschütz) und ein mit dem Vorladeschaltschütz in Reihe geschalteter Vorladewiderstand in jedem Energiespeicher 110 parallel zu einem der Schaltschütze 170 (die auch als Hauptschütze bezeichnet werden können) verbaut sein. Der Vorladewiderstand kann ein Kaltleiter oder PTC-Widerstand sein. Unmittelbar vor der Schließstellung (für den Betriebszustand und/oder den Nachlaufzustand) kann die Energiespeichersteuerung den Vorladeschaltschütz schließen. Die Energiespeichersteuerung 130 kann die Schließstellung der Schaltschütze 170 bewirken, sobald einen Spannungsdifferenz am Vorladewiderstand einen Schwellwert unterschreitet.

Die Systemsteuerung 140 ist ferner zur bidirektionalen Kommunikation mit dem Funktionsnetz 150 des Fahrzeugs ausgebildet. Beispielsweise können die Systemsignale in Reaktion auf ein Fahrzeugsignal erzeugt und ausgegeben werden. Ferner kann das Fahrzeugsignal eine Steuerungsanweisung umfassen. Die Systemsteuerung 140 analysiert die Steuerungsanweisung zur Bestimmung derjenigen Energiespeicher 110, die zur Umsetzung der Steuerungsanweisung relevant sind, und gibt ein Steuersignal an die Energiespeichersteuerungen 130 der betreffenden Energiespeicher 110 aus.

Das TES-System 100 kann durch den modularen Aufbau auf der Ebene der Energiespeicher 110 skalierbar eingesetzt werden. Die Energiespeicher 110 sind mehrfach parallel oder seriell verschaltbar. Durch die Wahl der Verschaltung und der Anzahl verschalteter Energiespeicher 110 ist das TES-System 100 auf eine Fahrzeug-spezifische Leistungs- und Energieanforderung ausgestaltbar. Diese Anforderungen hängen vom Grad der Elektrifizierung des Antriebsstrangs des Fahrzeugs ab. Ferner kann die Leistungsanforderung durch eine Transportleistung des Fahrzeugs und die Energieanforderung durch eine Reichweite des Fahrzeugs bestimmt sein.

Die Systemsteuerung 140 stellt hinsichtlich einer physischen Schnittstelle und eines Kommunikationsprotokolls eine einheitliche Datenschnittstelle zum Fahrzeug bereit, die unabhängig von der Fahrzeug-spezifischen Ausgestaltung des TES-Systems 100 ist. Die mehreren Energiespeicher 110 verhalten sich aufgrund der Kommunikation über die Systemsteuerung 140 gegenüber dem Fahrzeug wie ein entsprechend großer Energiespeicher. Dadurch wird ein Fahrzeug-spezifischer Integrationsaufwand minimiert.

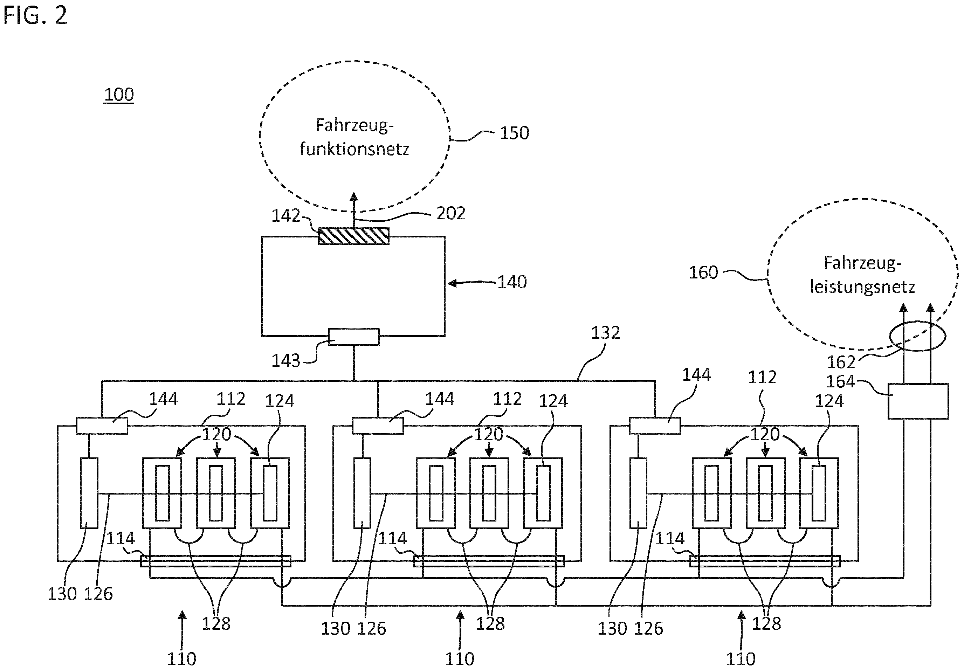

Figur 2 zeigt ein schematisches Blockschaltbild eines zweiten Ausführungsbeispiels eines TES-Systems 100. Mit den anderen Ausführungsbeispielen übereinstimmende Bezugszeichen bezeichnen entsprechende oder identische Merkmale.

Die Systemsteuerung 140 ist außerhalb der Gehäuse 112 der Energiespeicher 110 angeordnet. Die Systemsteuerung 140 umfasst eine erste Datenschnittstelle 142 für die fahrzeugseitige Kommunikation. Beispielsweise ist die erste Datenschnittstelle 142 mit dem Funktionsnetz 150 und/oder einer Motorsteuerung verbunden. Ferner umfasst die Systemsteuerung 140 eine zweite Datenschnittstelle 143, die über den externen Datenbus 132 mit Datenschnittstellen 144 der Energiespeicher 110 verbunden ist. Die Systemsteuerung 140 erhält die Signale der einzelnen Energiespeicher 110 über die zweite Datenschnittstelle 143. Das Systemsignal wird über die erste Datenschnittstelle 142 ausgegeben.

Die Hochvoltschnittstellen 114 der einzelnen Energiespeicher 110 sind parallel verschaltet und an das Leistungsnetz 160 und/oder einen Wechselrichter angeschlossen.

In jedem Ausführungsbeispiel kann eine Systemhochvoltschnittstelle 162 zum Energieaustausch zwischen dem TES-System 100 und dem Leistungsnetz 160 des Fahrzeugs vorgesehen sein. Ein von der Systemsteuerung 140 gesteuertes Systemschaltschütz 164 ermöglicht, die Systemhochvoltschnittstelle 162 spannungsfrei zu schalten. Alternativ kann das Systemschaltschütz 164 in einer Hochvoltverteilungseinheit des Leistungsnetzes 160 angeordnet sein. In diesem Fall kann das Systemschaltschütz 164 direkt (beispielsweise über den externen Datenbus 132) oder mittelbar (beispielsweise über eine Komponente des Funktionsnetzes 150) von der Systemsteuerung 140 gesteuert werden.

Die erste Datenschnittstelle 142 ist an einen seriellen Bus 202 des Fahrzeugfunktionsnetzes 150, beispielsweise einen vom TES-System 100 unabhängigen CAN-Bus, angeschlossen.

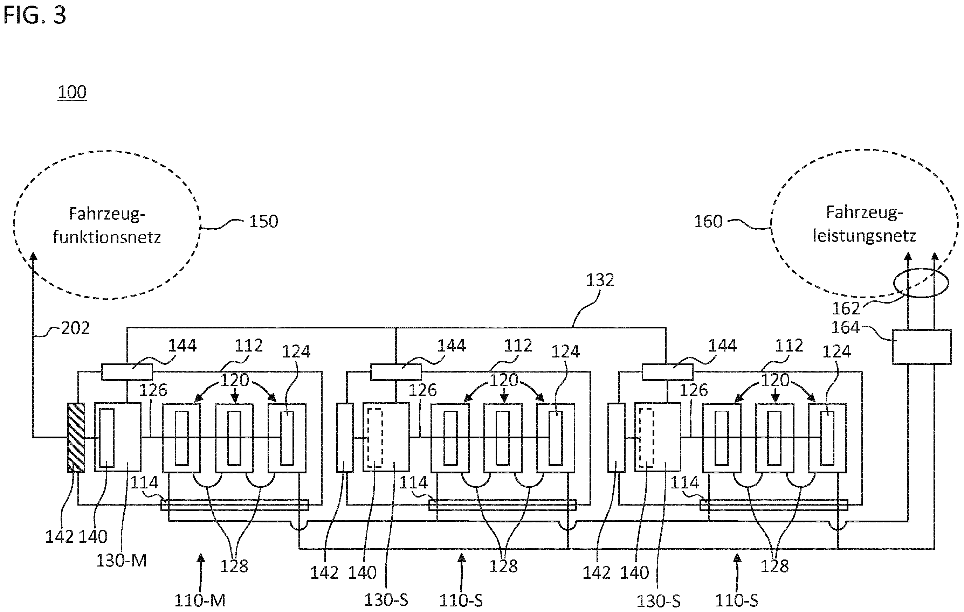

Figur 3 zeigt ein schematisches Blockschaltbild eines dritten Ausführungsbeispiels eines TES-Systems 100 für ein Fahrzeug. Das dritte Ausführungsbeispiel unterscheidet sich vom zweiten Ausführungsbeispiel dadurch, dass die Funktion der Systemsteuerung 140 in einem Energiespeicher 110-M der Energiespeicher 110 ausgeführt wird. Hierzu umfasst der Energiespeicher 110-M die erste Datenschnittstelle 142. Über eine zweite Datenschnittstelle 144 erhält der Energiespeicher 110-M die Signale der anderen Energiespeicher 110-S, die nicht die Funktion der Systemsteuerung 140 ausführen. Die erste Datenschnittstelle 142 und die zweite Datenschnittstelle 144 sind jeweils im Energiespeicher 110-M mit der Energiespeichersteuerung 130-M verbunden, die die Funktion der Systemsteuerung 140 ausführt.

Alle Energiespeicher 110-M und 110-S (oder zumindest deren Energiespeichersteuerungen 130-M bzw. 130-S) sind vorzugsweise baugleich. Auch die Energiespeicher 110-S können eine erste Datenschnittstelle 142 umfassen, die außerhalb des Energiespeichers 110-S unverbunden ist. Die zweiten Datenschnittstellen 144 aller Energiespeicher 110-M und 110-S sind über den externen Datenbus 132 verbunden.

In einer bevorzugten Ausgestaltung ist die Funktion der Systemsteuerung 140 auch in jeder Energiespeichersteuerung 130-S der Energiespeicher 110-S implementiert und nicht zur Ausführung aktiviert (gezeigt als gestrichelter Funktionsblock in Figur 3). Durch Setzen eines oder mehrerer Parameter der Energiespeichersteuerung 130 kann die Funktion der Systemsteuerung 140 wahlweise zur Ausführung aktiviert und deaktiviert werden.

Die in den Figuren 2 und 3 gezeigte Parallelschaltung der drei Hochvoltschnittstellen 114 ist beispielhaft. Abhängig von den Anforderungen des Fahrzeugleistungsnetzes 160 (z. B. hinsichtlich Strom, Spannung, Leistung und/oder Energie) kann eine größere Anzahl an Energiespeichern 110 und/oder eine andere Verschaltung der Hochvoltschnittstellen 114 eingesetzt werden. Insbesondere können die Hochvoltschnittstellen 114 innerhalb jeweils einer Gruppe von Energiespeichern 110 in Reihe geschaltet sein, und die Gruppen untereinander parallel geschaltet sein.

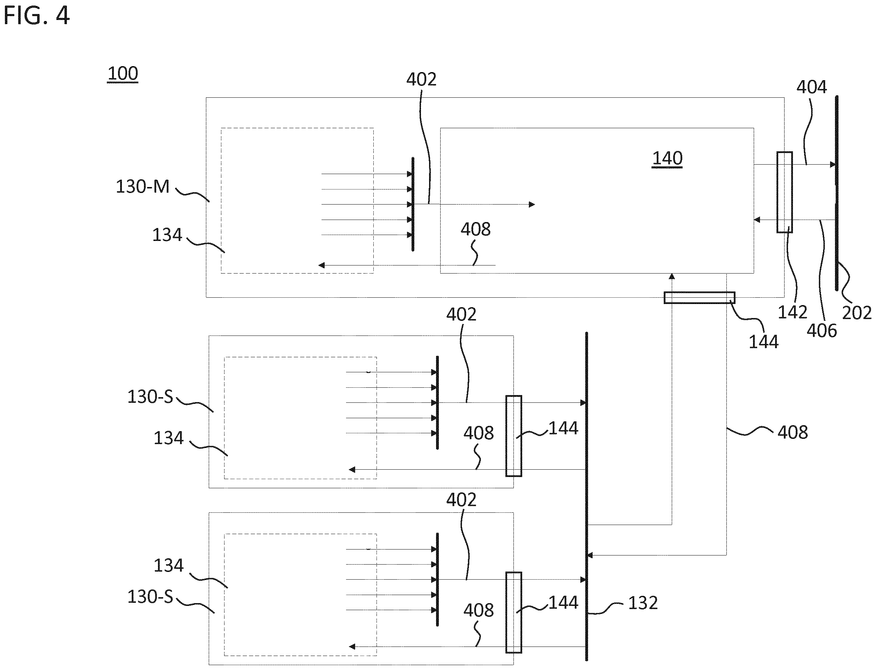

Figur 4 zeigt ein funktionales Blockdiagramm des TES-Systems 100, dessen funktionale Merkmale optional in jedem der vorgenannten Ausführungsbeispiele implementiert sind. Die funktionalen Merkmale können zumindest teilweise durch einen anwendungsspezifischen integrierten Schaltkreis (ASIC) implementiert sein und/oder in einem Speicher kodiert sein, auf den ein Prozessor zur Ausführung der funktionalen Merkmale zugreift.

Die Energiespeichersteuerung 130-M, welche die Funktion der Systemsteuerung 140 ausführt, kann aus einem Slave-Funktionsumfang 134 und dem Funktionsumfang der Systemsteuerung 140 zusammengesetzt sein. Der Slave-Funktionsumfang 134 kann dem Funktionsumfang für den Einzelbetrieb eines einzigen Energiespeichers und/oder dem Betrieb als Slave-Energiespeicher 110-S entsprechen. Der Slave-Funktionsumfang 134 kann mit dem (aktiven) Funktionsumfang der anderen Energiespeichersteuerungen 130-S übereinstimmen. Der Slave-Funktionsumfang 134 kann einen bestehenden Funktionsumfang eines herkömmlichen Energiespeichers beinhalten. Dadurch kann der Energiespeicher 110 abwärtskompatibel zum Einzelbetrieb sein.

Die Speicherzellen 122 im Energiespeicher 110-M betreffende Daten werden von der Energiespeichersteuerung 130-M in ein Anwendungsformat der Systemsteuerung 140 multiplexiert und an einer virtuellen oder physischen Schnittstelle als Signal 402 des Energiespeichers 110-M an die Systemsteuerung 140 übergeben. Entsprechende Daten betreffend die Speicherzellen 122 der jeweils anderen Energiespeicher 110-S werden in den jeweiligen Energiespeichersteuerungen 130-S in das Anwendungsformat der Systemsteuerung 140 multiplexiert und als das Signal 402 des Energiespeichers 110-S an der zweiten Datenschnittstelle 144 des jeweiligen Energiespeichers 110-S mittels des externen Datenbusses 132 an die Systemsteuerung 140 ausgegeben. Auf Grundlage der Signale 402 der Energiespeicher 110 gibt die Systemsteuerung 140 das Systemsignal 404 an der ersten Datenschnittstelle 142 aus.

In der entgegengesetzten Kommunikationsrichtung kann die Systemsteuerung 140 ein Fahrzeugsignal 406 an der ersten Datenschnittstelle 142 erhalten. Optional verarbeitet die Systemsteuerung 140 das Fahrzeugsignal 406. Die Systemsteuerung 140 leitet (gegebenenfalls nach der Signalverarbeitung) das Fahrzeugsignal 406 selektiv weiter oder gibt ein aus dem Fahrzeugsignal 406 abgeleitetes Steuersignal 408 an den Slave-Funktionsumfang 134 der jeweils betreffenden Energiespeichersteuerungen 130-M und/oder 130-S aus.

Die Konfiguration einer jeden Energiespeichersteuerung 130 als Master-Energiespeichersteuerung 130-M mit aktivierter Funktion der Systemsteuerung 140 oder als Slave-Energiespeichersystemsteuerung 130-S mit deaktivierter Funktion der Systemsteuerung 140 kann dadurch erreicht werden, dass die in allen Energiespeichersteuerungen 130 implementierte Funktion der Systemsteuerung 140 im deaktivierten Zustand eine Weiterleitungsfunktion ausführt. Die Weiterleitungsfunktion leitet die Signale 402 (d. h., die multiplexierten Daten) direkt an die zweite Datenschnittstelle 144 des jeweiligen Energiespeichers 110-S zur Ausgabe weiter. Die an der zweiten Datenschnittstelle 144 des jeweiligen Energiespeichers 110-S erhaltenen Steuersignale 408 werden an den Slave-Funktionsumfang 134 der Energiespeichersteuerung 130-S weitergeleitet.

Beispielsweise kann an der ersten Datenschnittstelle 142 ein Notabschaltsignal 406 vom Fahrzeug erhalten werden. In Reaktion auf das erhaltene Notabschaltsignal 406 gibt die Systemsteuerung 140 an das Schaltschütz 170 des eigenen Energiespeichers 110-M und über den externen Datenbus 132 an alle anderen Schaltschütze 170 ein Steuersignal 408 zur Trennung (d. h. Potenzialfreischaltung) der Hochvoltschnittstellen 114 aus.

Durch die mit der Systemsteuerung 140 verbundene erste Datenschnittstelle 142 ist eine einzige Kommunikationsschnittstelle zum Fahrzeug bereitgestellt, so dass das TES-System 100 hinsichtlich der Kommunikation mit dem Funktionsnetz 150 des Fahrzeugs einem einzigen Energiespeicher mit entsprechenden Speichereigenschaften gleicht. Vorzugsweise kann durch Konfiguration der Parameter der Energiespeichersteuerung 130 jeder einzelne Energiespeicher 110 wahlweise als unverbundener Einzel-Energiespeicher, als Master-Energiespeicher 110-M im Verbund des TES-Systems 100 oder als Slave-Energiespeicher 110-S im Verbund des TES-Systems 100 konfiguriert werden.

Die Systemsteuerung 140 gibt mit dem Systemsignal 404 beispielsweise einen aggregierten gemeinsamen Zustand (oder Status) aller zum TES-System 100 gehörenden Energiespeicher 110 aus. Jedes Signal 402, das von einer der Slave-Energiespeichersteuerungen 130-S ausgegeben wird, wird in der Master-Energiespeichersteuerung 130-M von der Systemsteuerung 140 mit den entsprechenden Signalen 402 (soweit vorhanden) der anderen Energiespeicher 110 aggregiert und als ein gemeinsamer Wert als das Systemsignal 404 nach außen zum Fahrzeug über die erste Datenschnittstelle 142 kommuniziert.

Die Aggregation beinhaltet auch eine Kontrollfunktion. Beispielsweise umfasst die Kontrollfunktion eine Überprüfung des Verbindungsstatus aller Energiespeicher 110 am externen Datenbus 132. Alternativ oder ergänzend umfasst die Kontrollfunktion eine Plausibilitätsprüfung der von den Slave-Energiespeichersteuerungen 130-S erhaltenen Signale. Die Plausibilitätsprüfung vergleicht das erhaltene Signal mit für den Signaltyp in der Systemsteuerung 140 gespeicherten Grenzwerten (z. B. Stromgrenzen) für den jeweiligen Energiespeicher 110-S.

Ist ein erhaltenes Signal fehlerhaft, nicht plausibel oder nicht vorhanden, führt die Systemsteuerung 140 eine Fehlerreaktion aus.

Bestimmen die Daten 402 elektrotechnische Größen (beispielsweise einen momentanen Strom, einen maximal entnehmbaren Strom, eine momentane Spannung oder eine Restladung), berechnet die Systemsteuerung 140 in Abhängigkeit der Verschaltung der Hochvoltschnittstellen 114 die aggregierte elektrotechnische Größe und gibt diese als das Systemsignal aus. Die verwendete Verschaltung der Hochvoltschnittstellen 114 wird im Zuge der Konfiguration des Master-Energiespeichers 110-S in der Systemsteuerung 140 gespeichert. Beispielsweise sind in der Systemsteuerung 140 in Abhängigkeit von der Verschaltung Aggregationsregeln gespeichert. Die Aggregationsregeln können sowohl für elektrotechnische Größen als auch Zustandsgrößen (beispielsweise Ladezustand oder Alterungszustand) definiert sein.

Die Signale 402 der einzelnen Energiespeicher 110, die eine gemessene Temperatur angeben, werden durch Auffinden eines Extremwerts unter den signalisierten Temperaturwerten aggregiert. Beispielsweise wird unter allen signalisierten Temperaturwerten, die größer als 0°C sind, der größte Temperaturwert im Systemsignal 404 ausgegeben. Alternativ oder ergänzend wird unter allen signalisierten Temperaturwerten, die kleiner oder gleich 0°C sind, der kleinste Temperaturwert im Systemsignal 404 ausgegeben.

Vorzugsweise werden die einzelnen Energiespeicher 110 durch eine gemeinsame Kühlmittelzirkulation in einem Betriebstemperaturbereich gehalten. Unter den von den einzelnen Energiespeichern 110 signalisierten Temperaturwerten des Kühlmittels wird der größte Temperaturwert als das Systemsignal ausgegeben.

Die von den einzelnen Energiespeichern 110 erhaltenen Signale 402 geben optional eine Ladung (z. B. in Coulomb, beispielsweise eine verbleibende Restladung) an. Die Summe der signalisierten Ladungen wird im Systemsignal 404 ausgegeben.

Optional geben die Signale 402 für jeden verfügbaren Energiespeicher 110 einen Maximalstrom an. Beispielsweise wird der kleinste Maximalstrom (aus den signalisierten Maximalströmen der einzelnen Energiespeicher 110) mit der Anzahl verfügbarer Energiespeicher 110 multipliziert und im Systemsignal 404 ausgegeben. Ein Energiespeicher 110 ist verfügbar, wenn von ihm keine Fehlermeldung vorliegt und kein Fehler durch die Systemsteuerung 140 festgestellt wurde.

Dadurch kann sichergestellt werden, dass jeder einzelne Energiespeicher 110 innerhalb der für seine Eigensicherheit fortlaufend geprüften Grenzen betrieben wird. Ferner kann durch den Ausschluss fehlerhafter Energiespeicher 110 aufgrund der parallelen Verschaltung der Hochvoltschnittstellen 114 mit nur einem Teil der Energiespeicher 110 das Fahrzeug betrieben werden. Dadurch kann ein redundanter Betrieb (z. B. bei einer Überkapazität an Energiespeichern 110) oder ein Notbetrieb (z. B. ein sogenannter "Limp Home Mode") realisiert werden.

Fehlerhafte Energiespeicher 110 werden mittels des jeweiligen Schaltschützes 170 vom Leistungsnetz 160 getrennt. Jeder einzelne Energiespeicher 110 implementiert seine Eigensicherheit. Dadurch kann die Systemsteuerung 140 ohne Sicherheitsrelevanz sein.

Optional geben die Signale 402 der einzelnen Energiespeicher 110 einen Energieinhalt des jeweiligen Energiespeichers 110 an. Das Systemsignal 404 gibt einen entnehmbaren Gesamtenergieinhalt an. Das Systemsignal 404 kann auf einer (optional gewichteten) Summe der einzelnen Energieinhalte basieren. Der Beitrag der einzelnen Energieinhalte jedes Energiespeichers 110 zum entnehmbaren Gesamtenergieinhalt kann aus einem anteiligen Batteriestrom bestimmt werden.

Auf Grundlage eines von jedem Energiespeicher 110 signalisierten Innenwiderstandswerts des jeweiligen Energiespeichers 110 kann gemäß der Verschaltung der Hochvoltschnittstellen 114 der Gesamtwiderstand berechnet und als Systemsignal 404 ausgegeben werden. Alternativ oder ergänzend bestimmt die Systemsteuerung 140 auf Grundlage der signalisierten Innenwiderstandswerte den anteiligen Batteriestrom.

Optional erhält die Systemsteuerung 140 von jedem Energiespeicher 110 Signale 402 mit Lebensdauer-optimierten Grenzwerten (für eine Obergrenze und eine Untergrenze) des Ladezustands (auch als "State of Charge" oder SoC bezeichnet). Zur Aggregation der Lebensdauer-optimierten Grenzwerte des Ladezustands wählt die Systemsteuerung 140 die Lebensdauer-optimalen Grenzwerte des Ladezustands aus, welche mit der daraus resultierenden Stromverteilung aller Energiespeicher 110 möglichst optimal auf eine Soll-Alterungskurve zurückführen. Dabei wird die resultierende Stromverteilung der einzelnen Energiespeicher 110 aus dem von den einzelnen Energiespeichern 110 signalisierten Innenwiderstandswerten von der Systemsteuerung 140 berechnet.

Die einzelnen Energiespeicher 110 können ferner einen Alterungszustand (auch als "State of Health" oder SoH bezeichnet) des jeweiligen Energiespeichers 110 angeben. Der Alterungszustand der einzelnen Energiespeicher 110 wird von der Systemsteuerung 140 als Fehlerindikator des jeweiligen Energiespeichers 110 (z. B. beim Überschreiten von Grenzwerten) und/oder zur Berechnung eines Lebensdauer-optimierten Grenzwerts für den Strom des jeweiligen Energiespeichers 110 oder des TES-Systems 100 verwendet.

Alternativ oder ergänzend kann der Ladezustand und/oder der Alterungszustand nach denselben Aggregationsregeln berechnet werden, die auch für die Zustandsaggregation der einzelnen Speicherzellen 122 innerhalb der Zellmodulsteuerung 124 implementiert sind.

Die Signale 402 der einzelnen Energiespeicher 110 geben einen Spannungswert (beispielsweise einen gegenwärtigen und/oder einen vorhergesagten Spannungswert) für die einzelnen Energiespeicher 110 an. Das Systemsignal 404 für den entsprechenden Spannungswert wird gemäß der Verschaltung der Hochvoltschnittstellen 114 von der Systemsteuerung 140 berechnet.

Allgemein kann ein Systemzustand 404 des TES-Systems 100 bestimmt werden, indem der sicherste oder konservativste Zustand aus den von den Energiespeichern 110 als verfügbar signalisierten Zuständen 402 ausgewählt wird. Alternativ oder ergänzend kann das TES-System 100 gemäß dem leistungsschwächsten Energiespeichersystem 110 betrieben wird. Der sicherste Zustand kann der für den momentanen Betrieb aller Energiespeicher 110 zuverlässigste Zustand sein. Der konservativste Zustand kann eine Lebensdauer aller Energiespeicher 110 maximieren.

In der Kommunikationsrichtung vom Fahrzeug zu den Energiespeichern 110 werden alle Fahrzeugsignale 406, welche die Master-Energiespeichersteuerung 110-M vom Fahrzeug erhält, an den jeweiligen Slave-Funktionsumfang 134 der einzelnen Energiespeichersteuerungen 130 verteilt. Gegebenenfalls wird das Fahrzeugsignal dabei in ein für jede einzelne Energiespeichersteuerung 130 spezifisches Steuersignal 408 umgesetzt.

Die Aggregation und Verteilung der Signale durch die Systemsteuerung 140 betrifft auch die Diagnose des TES-Systems 100 (z. B. Diagnoseanforderungen vom Fahrzeug an die Systemsteuerung 140 und Diagnosemeldungen von der Systemsteuerung 140 an das Fahrzeug). Diagnosemeldungen der einzelnen Energiespeichersteuerungen 130 werden durch die Systemsteuerung 140 gesammelt und aggregiert an das Fahrzeug über die erste Datenschnittstelle 142 ausgegeben. Die Aggregation kann beispielsweise die Bildung eines einheitlichen Datensatzes in einem Datenpaket des Systemsignals 404 umfassen. Im Datensatz sind Diagnosewerte bezüglich der einzelnen Zellmodule 120 ohne eine Gruppierung in Energiespeicher 110 aufgelistet.

Diagnoseabfragen (die auch als Diagnoseroutinen bezeichnet werden) vom Fahrzeug werden an der ersten Datenschnittstelle 142 der Systemsteuerung 140 erhalten und an den bestehenden Funktionsumfang 134 der einzelnen Energiespeichersteuerungen 130 weitergeleitet.

Im Betriebszustand des TES-Systems 100 sind das Systemschaltschütz 164 und die (beispielsweise an den Hochvoltschnittstellen 114 implementierten) Schaltschütze 170 geschlossen. Im Betriebszustand fließen Lade- und Entladeströme durch die Systemhochvoltschnittstelle 162 zu beziehungsweise von den Energiespeichern 110. Im Betriebszustand sind die Spannungen an den Hochvoltschnittstellen 114 aufgrund der Parallelschaltung der Energiespeicher 110 einheitlich. Jedoch verteilt sich der durch die Systemhochvoltschnittstelle 162 fließende Strom nicht zu gleichen Teilen auf die Hochvoltschnittstellen 114 der einzelnen Energiespeicher 110, da sich die Energiespeicher 110 in ihren elektrischen und/oder elektrochemischen Energiespeicherzuständen unterscheiden.

Die Speicherkapazität jedes Energiespeichers 110 beschreibt seine Speicherfähigkeit als die im vollständig geladenen Zustand entnehmbare Ladung (z. B. das Zeitintegral des Entladestroms von Anfangsspannung bis Schlussspannung). Der Ladezustand (auch als "State of Charge" oder SoC bezeichnet) jedes Energiespeichers 110 ist der Anteil der noch entnehmbaren Ladung an der Speicherkapazität. Der funktionale Zusammenhang zwischen der (z. B. relaxierten) Leerlaufspannung an der Hochvoltschnittstelle 114 und dem Ladezustand des Energiespeichers 110 ist die Entladekurve. Zum elektrischen Energiespeicherzustand jedes Energiespeichers 110 gehört ferner die Leerlaufspannung, sein Innenwiderstand, eine erste Zeitkonstante (beispielsweise verursacht durch eine elektrochemische Doppelschicht zwischen Elektrode und Elektrolyt) und/oder eine zweite Zeitkonstante (beispielsweise verursacht durch Diffusion der Ionen im Elektrolyt). Die erste Zeitkonstante kann ein Sekundenbruchteil, beispielsweise weniger als 0,1 s oder 0,01 s sein. Die zweite Zeitkonstante kann größer als die erste Zeitkonstante sein, beispielsweise größer als 1 s oder 10 s.

Mittels einer in der Energiespeichersteuerung 140 gespeicherten Entladekurve kann aufgrund der gemessenen Leerlaufspannung der momentane Ladezustand bestimmt werden. Die Entladekurve kann tabellierten und/oder durch Integration des Stroms im Betriebszustand aktualisiert werden.

Die einzelnen Energiespeicher 110 im TES-System 100 unterscheiden sich in ihren Energiespeicherzuständen, beispielsweise hinsichtlich Speicherkapazität, Entladekurve, Ladezustand, Leerlaufspannung, Innenwiderstand, erster Zeitkonstanten und/oder zweiten Zeitkonstanten. Ursache und lokale Einflussfaktoren der abweichenden Energiespeicherzustände der einzelnen Energiespeicher 110 sind beispielsweise Fertigungsstreuung, Alterung, Temperatur und/oder eine Kombination von Speicherzellen 122, Zellmodulen 120 oder Energiespeichern 110 verschiedener Typen und/oder verschiedener Hersteller.

Deshalb liegen nach einem Betriebszustand, beispielsweisen wenn das Fahrzeug abgestellt wird und/oder eine Klemme der Fahrzeugzündung auf einem Referenzpotential liegt, die Energiespeicher 110 in unterschiedlichen Energiespeicherzuständen vor. Beispielsweise können Ladezustand und/oder Leerlaufspannung der einzelnen Energiespeicher 110 uneinheitlich sein. Solche abweichenden Energiespeicherzuständen können im Betriebszustand auch bei im Wesentlichen übereinstimmenden Speicherkapazitäten und Entladekurven durch unterschiedliche Innenwiderstände oder Zeitkonstanten entstehen.

Nach dem Betriebszustand können Relaxationseffekte (beispielsweise mit unterschiedlichen zweiten Zeitkonstanten) und/oder Selbstentladung (beispielsweise mit unterschiedlichen Entladungsraten) die Abweichung zwischen den Energiespeicherzuständen vergrößern. Unterschiedliche Ladezustände der einzelnen Energiespeicher 110 verringern jedoch den Ladezustand des TES-Systems 100, beispielsweise auf den kleinsten Ladezustand unter den Energiespeichern 110.

Unterschiedliche Leerlaufspannungen führen beim Schließen der Schaltschütze 170 der Energiespeicher 110 zu Ausgleichsströmen (beispielsweise zu Beginn des nächsten Betriebszustands), welche die Schaltschütze 170 schädigen können. Wird die Spannungsdifferenz größer als eine schaltbare Maximalspannung oder übersteigt der durch die Spannungsdifferenz verursachte Ausgleichsstrom einen (von zumindest einem der Energiespeicher 110 für dessen Eigensicherheit) überwachten Maximalstrom, kann ein Schließen (und damit ein weiteren Betriebszustand des TES-Systems 100) unmöglich sein. Ausgleichströme können die Speicherzelle 122 insbesondere bei tiefen Temperaturen (beispielsweise niedriger als 0°C oder niedriger als -20°C) schädigen.

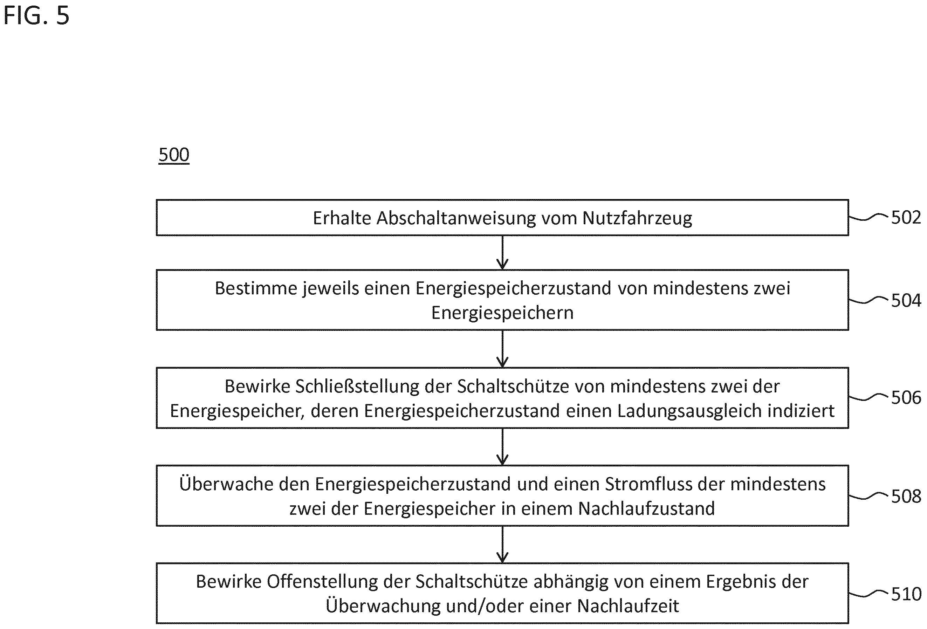

Figur 5 zeigt ein Ablaufdiagramm für ein Verfahren 500 zum Ladungsausgleich eines TES-Systems 100. Das Verfahren kann von der Systemsteuerung 140 in einem Nachlaufzustand (beispielsweise nach einem Betriebszustand) ausgeführt werden. Alternativ oder ergänzend kann das Verfahren 500 während eines Ruhezustands und/oder nach dem Ruhezustand ausgeführt werden, beispielsweise wenn der Ruhezustand länger als eine vorgegebene Zeitdauer bestand.

Nach einem Schritt 502 des Erhalts einer Abschaltanweisung, beispielsweise in Reaktion auf den Erhalt der Abschaltanweisung, nimmt das TES-System 100 einen Nachlaufzustand an. Im Nachlaufzustand ist das Systemschaltschütz 164 offen. Bei einem von der Systemsteuerung 140 gesteuerten Systemschaltschütz 164 kann die Systemsteuerung 140 die Offenstellung des Systemschaltschützes 164 in Reaktion auf die Abschaltanweisung bewirken. Alternativ oder ergänzend kann das Fahrzeugleistungsnetz 160 das TES-System 100 vom Fahrzeugleistungsnetz 160 abtrennen.

Im Schritt 504 wird der Energiespeicherzustand von mindestens zwei Energiespeichern 110 bestimmt. Dies kann sowohl den Master-Energiespeicher 110-M als auch mindestens einen Slave-Energiespeicher 110-S betreffen. Die Energiespeicherzustände können als Signal 402 erhalten werden, beispielsweise auf ein Steuersignal 408 zur Zustandsabfrage.

Indizieren mindestens zwei der Energiespeicherzustände eine Abweichung (beispielsweise gegenüber einem erwarteten oder durchschnittlichen Energiespeicherzustand), die durch einen Ladungsaustausch zwischen den entsprechenden Energiespeichern 110 verringert werden kann, wird im Schritt 506 die Schließstellung der Schaltschütze 170 der Energiespeicher 110 mit abweichenden Energiespeicherzuständen bewirkt. Dadurch werden die betreffenden Energiespeicher 110 zum Ladungsaustausch verbunden.

Im Schritt 508 werden während der Schließstellung der Schaltschütze 170 im Nachlaufzustand die Energiespeicherzustände der zum Ladungsaustausch verbunden Energiespeicher 110 überwacht. Beispielsweise erhält die Systemsteuerung 140 periodisch ein Signal 402, das den durch die Hochvoltschnittstellen 114 fließenden Strom jeweils angibt. Ausgehend von den Energiespeicherzuständen bei Beginn des Ladungsausgleichs aktualisiert die Systemsteuerung 140 die Energiespeicherzuständen durch zeitliche Integration des Stroms.

Sind die Energiespeicherzuständen hinreichend ausgeglichen, werden im Schritt 510 die Schaltschütze 170 der zum Ladungsaustausch verbunden Energiespeicher 110 geöffnet. Optional ist der Ladungsausgleich zeitlich begrenzt.

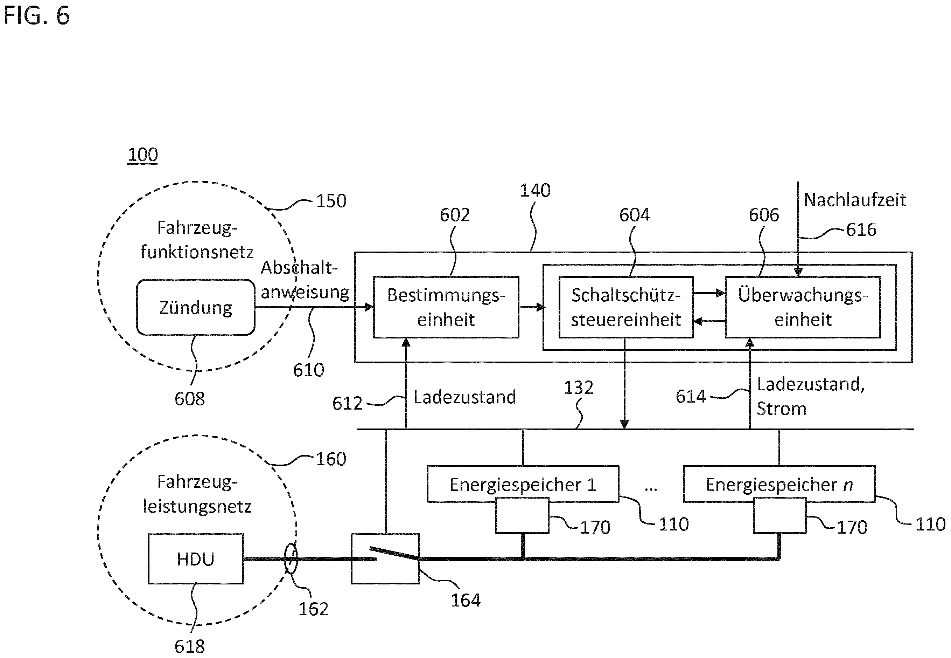

Figur 6 zeigt ein schematisches Blockschaltbild zur Implementierung eines Nachlaufzustands in einem TES-System 100 für ein Fahrzeug. Die Merkmale des Nachlaufzustands können in jedem vorgenannten Ausführungsbeispiel implementiert werden, beispielsweise in der Systemsteuerung 140.

Die Systemsteuerung 140 umfasst eine Bestimmungseinheit 602 zum Bestimmen eines Nachlaufbedarfs, eine Schaltschützsteuereinheit 604 zum Steuern der Schaltschütze 170 und eine Überwachungseinheit 606 zur Überwachung der Energiespeicherzustände im Nachlaufzustand.

Bei Unterbrechung einer Fahrzeugzündung 608 gibt das Fahrzeugfunktionsnetz 150 eine Abschaltanweisung 610 an das TES-System 100 aus, die als Fahrzeugsignal 406 von der Systemsteuerung 140 an der ersten Datenschnittstelle 142 erhalten wird. Statt direkt in den Ruhezustand zu wechseln beginnt der Nachlaufzustand bei geöffnetem Systemschaltschütz 164.

Die Bestimmungseinheit 602 ermittelt aufgrund erster Energiespeicherzustände 612 (beispielsweise abweichender Leerlaufspannungen oder Ladezustände) einen Nachlaufbedarf, beispielsweise gemäß dem Schritt 504. Die Bestimmungseinheit 602 oder eine dezidierte Schaltschützsteuereinheit 604 bewirkt die Offenstellung des Schaltschützes 170 bei den Energiespeichern 110, für die kein Nachlaufbedarf festgestellt wurde.

Die Schaltschützsteuereinheit 604 bewirkt die Schließstellung der Schaltschütze 170 von mindestens zwei Energiespeichern 110, für die der Nachlaufbedarf festgestellt wurde, beispielsweise gemäß dem Schritt 506. Die Überwachungseinheit 606 überwacht die aus den Schließstellungen resultierenden zweiten Energiespeicherzustände 614, beispielsweise gemäß den Schritten 508 und 510. Die überwachten zweiten Energiespeicherzustände 614 können einen Stromfluss zwischen den nachlaufenden Energiespeichern 110 und/oder deren sich ändernde Ladezustände umfassen.

Im Nachlaufzustand bleiben die eigenen Sicherheitsfunktionen der einzelnen Energiespeicher 110 aktiv. Beispielsweise werden die Zellspannungen der Speicherzellen 122 oder die Modulspannungen der Zellmodule 120 im Energiespeicher 110, die an der Stromschiene 128 anliegende Speicherspannung, die Temperaturen der Speicherzellen 122 oder der Zellmodule 120 im Energiespeicher 110, die Temperatur des Energiespeichers 110 und/oder der durch die Hochvoltschnittstelle 114 fließende Strom von der Energiespeichersteuerung 130 überwacht. Werden Grenzwerte überschritten, öffnet die jeweilige Energiespeichersteuerung 130 das zugeordnete Schaltschütz 170, beispielsweise unabhängig von einem Steuersignal 408 der Systemsteuerung 140.

Die Systemsteuerung 140 hält die Schließstellungen aufrecht solange eine Nachlaufbedingung erfüllt ist. Beispielsweise hält die Systemsteuerung 140 die Schließstellungen aufrecht bis die Leerlaufspannungen eine vorbestimmte Differenz unterschreiten oder innerhalb eines vorbestimmten Bereichs liegen, bis die Summe der vorzeichenbehafteten Ausgleichsströme oder der Betrag jedes Ausgleichstroms einen vorbestimmten Schwellwert unterschreitet, bis die Ladezustände innerhalb eines vorbestimmten Bereichs liegen und/oder bis eine vorbestimmte Nachlaufzeit 616 erreicht ist.

Das Systemschaltschütz 164 ist in der in Figur 6 gezeigten Implementierung im TES-System 100, beispielsweise im Master-Energiespeicher 110-M, angeordnet. Das Systemschaltschütz 164 ist alternativ in einer Hochvoltverteilungseinheit 618 (auch als "High Voltage Distribution Unit" oder HDU bezeichnet) des Fahrzeugleistungsnetzes 160 implementiert.

In allen Implementierungen kann das Systemschaltschütz 164 über den externen Datenbus 132 von der Systemsteuerung 140 gesteuert werden. Alternativ kann das Systemschaltschütz 164 vom Fahrzeugfunktionsnetz 150 direkt gesteuert werden, beispielsweise zur Bewirkung der Offenstellung bei unterbrochener Zündung 608.

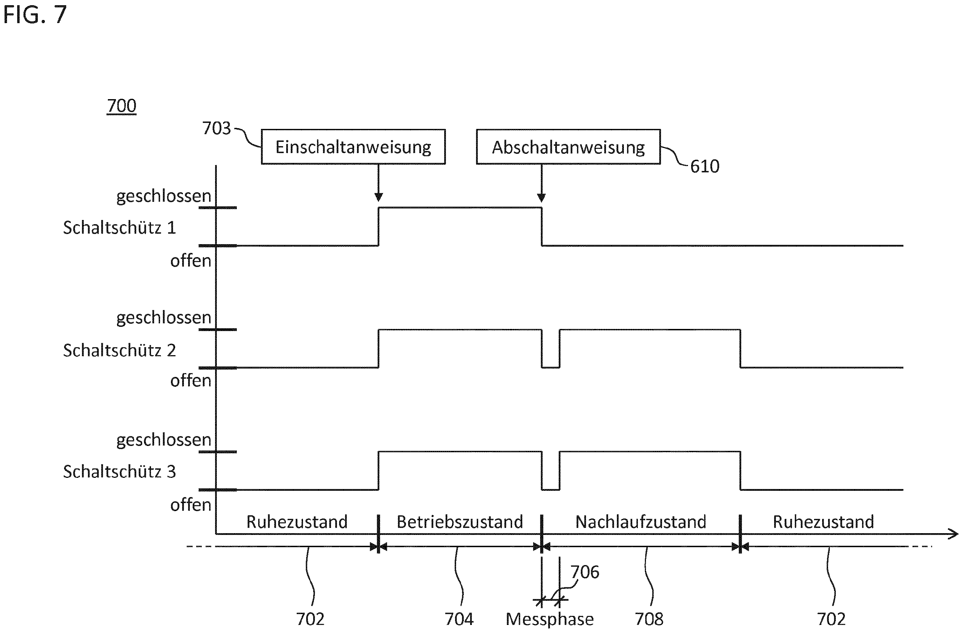

Figur 7 zeigt ein Beispiel einer zeitliche Abfolge 700 von Offen- und Schließstellungen der Schaltschütze 170, die von der Systemsteuerung 140 bewirkt werden können. Dabei entsprechen die gezeigten Schaltschützstellungen "1" bis "3" jeweils einem der Schaltschütze 170. Die Anzahl von drei Schaltschützen ist nur beispielhaft. Auch die Anzahl von zwei Schaltschützen "2" und "3" mit Nachlaufbedarf ist nur beispielhaft.

Im Ruhezustand 702 sind alle Schaltschütze 170 geöffnet. Erhält die Systemsteuerung 140 ein Fahrzeugsignal 406, das eine Einschaltanweisung 703 enthält, gibt die Systemsteuerung 140 im Betriebszustand 704 ein Steuersignal 408 zum Schließen der Schaltschütze 170 aller (funktionsfähigen) Energiespeicher 110 aus.

Am Ende des Betriebszustands 704 erhält die Systemsteuerung 140 die Abschaltanweisung 610 gemäß dem Schritt 502. In Reaktion auf die Abschaltanweisung 610 öffnet die Systemsteuerung 140 alle Schaltschütze 170 während einer Messphase 706 des Nachlaufzustands 708. Die Messphase 706 dauert vorzugsweise so lang wie (oder länger als) die längste (z. B. die zweite) Zeitkonstante der Energiespeicher 110.

Bis zum Ende der Messphase 706 wird die relaxierte Leerlaufspannung an den einzelnen Energiespeichern 110 erreicht und gemessen. Jede Energiespeichersteuerungen 130 gibt die jeweilige Leerlaufspannung und/oder einen aus der Leerlaufspannung abgeleiteten Ladezustand als den ersten Energiespeicherzustand 612 im Signal 402 an die Systemsteuerung 140 aus.

Gemäß dem Schritt 504 bestimmt die Systemsteuerung 140, für welche der Energiespeicher 110 ein Ladungsausgleich durchgeführt wird und schließt gemäß dem Schritt 506 die entsprechenden Schaltschütze "2" und "3".

Die entsprechenden Energiespeichersteuerung 130 geben den sich zeitlich ändernden zweiten Energiespeicherzustand 614 kontinuierlich im Signal 402 an die Systemsteuerung 140 zur Überwachung im Schritt 508 aus. Der zweite Energiespeicherzustand 614 kann den momentanen Strom, die sich ändernde Leerlaufspannung und/oder den sich ändernden Ladezustand umfassen. Alternativ oder ergänzend können der erste Energiespeicherzustand 612 und der zweite Energiespeicherzustand 614 jeweils einen durch Impedanzspektroskopie bestimmten komplexwertigen Innenwiderstand umfassen.

Nach Ablauf der Nachlaufbedingung werden die entsprechenden Schaltschütze "2" und "3" gemäß dem Schritt 510 geöffnet. Das TES-System 100 nimmt den Ruhezustand 702 an. Durch den regelmäßigen Nachlauf können Ladungsdifferenzen stetig ausgeglichen werden. Dadurch kann das TES-System 100 optimal auf den nächsten Betriebszustand vorbereit werden.

Obwohl die Erfindung in Bezug auf exemplarische Ausführungsbeispiel beschrieben worden ist, ist es für einen Fachmann ersichtlich, dass verschiedene Änderungen vorgenommen werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Traktionsenergiespeichersystem
- 110: Energiespeicher
- 112: Gehäuse des Energiespeichers
- 114: Hochvoltschnittstelle
- 120: Zellmodul
- 122: Speicherzellen
- 124: Zellmodulsteuerung
- 126: Interner Datenbus
- 127: Anschlussklemme
- 128: Stromschiene
- 130: Energiespeichersteuerung
- 132: Externer Datenbus
- 134: Funktionsumfang der Energiespeichersteuerung im Einzelbetrieb
- 140: Systemsteuerung
- 142: Erste Datenschnittstelle
- 144: Zweite Datenschnittstelle
- 150: Funktionsnetz des Fahrzeugs
- 160: Leistungsnetz des Fahrzeugs
- 162: Systemhochvoltschnittstelle
- 164: Systemschaltschütz
- 170: Schaltschütz
- 172: Steuerverbindung zwischen Energiespeichersteuerung und Schaltschütz
- 202: CAN-Bus des Funktionsnetzes
- 402: Signal des Energiespeichers
- 404: Systemsignal
- 406: Fahrzeugsignal
- 408: Steuersignal
- 500: Verfahren zum Ladungsausgleich
- 502: Schritt des Signalerhalts
- 504: Schritt der Zustandsbestimmung
- 506: Schritt des Schließens
- 508: Schritt der Zustandsüberwachung
- 510: Schritt des Öffnens
- 602: Bestimmungseinheit
- 604: Schaltschützsteuereinheit
- 606: Überwachungseinheit
- 608: Schaltstellung der Fahrzeugzündung
- 610: Abschaltanweisung
- 612: Erster Energiespeicherzustand
- 614: Zweiter Energiespeicherzustand
- 616: Zeitsignal im Nachlaufzustand
- 618: Hochvoltverteilungseinheit
- 700: Abfolge von Schaltschützstellungen
- 702: Ruhezustand
- 703: Einschaltanweisung
- 704: Betriebszustand
- 706: Messphase
- 708: Nachlaufzustand

## Patentansprüche

1. Traktionsenergiespeichersystem (100) für ein Fahrzeug, umfassend:
mehrere elektrische Energiespeicher (110),
wobei jeder der Energiespeicher mehrere über Stromschienen (128) elektrisch verbundene Zellmodule (120), ein oder mehrere Schaltschütze (170) und eine Energiespeichersteuerung (130) zum Steuern der Zellmodule (120) und des Schaltschützes oder der Schaltschütze (170) umfasst, und jedes der Zellmodule mehrere Speicherzellen (122) und eine Zellmodulsteuerung (124) umfasst,
wobei in jedem Energiespeicher (110) das Schaltschütz oder die Schaltschütze (170) dazu ausgebildet sind, die Stromschienen (128) des Energiespeichers mit einer Energiespeicherhochvoltschnittstelle (114) des jeweiligen Energiespeichers nach Vorgabe der Energiespeichersteuerung (130) in einer Schließstellung des Schaltschützes oder der Schaltschütze (170) zu verbinden und in einer Offenstellung des Schaltschützes oder der Schaltschütze (170) zu trennen, und
wobei die Energiespeicherhochvoltschnittstellen (114) der Energiespeicher (110) im Traktionsenergiespeichersystem parallel geschaltet sind; und
eine mit den Energiespeichersteuerungen (130) in Wirkverbindung stehende Systemsteuerung (140), die dazu ausgebildet ist,
die Schließstellung der Schaltschütze (170) aller Energiespeicher (110) in einem Betriebszustand (704) des Traktionsenergiespeichersystems zu bewirken,
einen Energiespeicherzustand (612; 614) der Energiespeicher (110) angebende Signale (402) von den jeweiligen Energiespeichersteuerungen (130) zu erhalten;
für eine Messphase (706) eines Nachlaufzustands (708) die Offenstellung der Schaltschütze (170) der Energiespeicher (110) zu bewirken, wobei die erhaltenen Energiespeicherzustände (612; 614) auf einer in der Messphase (706) gemessenen Leerlaufspannung des jeweiligen Energiespeichers (110) basieren, und die Schließstellung der Schaltschütze (170) von mindestens zwei der Energiespeicher (110), die eine echte Teilmenge aller Energiespeicher (110) sind, im Nachlaufzustand (708) des Traktionsenergiespeichersystems zu bewirken, wobei durch die geschlossenen Schaltschütze (170) im Nachlaufzustand (708) die mindestens zwei Energiespeicher (110) über ihre parallel geschalteten Energiespeicherhochvoltschnittstellen (114) zum Ladungsaustausch verbunden sind zum Ausgleich einer im Betriebszustand (704) entstandene Ungleichheit der Energiespeicherzustände (612; 614), und
den Nachlaufzustand (708) zu beenden und einen Ruhezustand (702) zu beginnen, wenn eine vorgegebene Differenz der Energiespeicherzustände (612; 614) unterschritten ist, wobei die Systemsteuerung (140) dazu ausgebildet ist, die Offenstellung der Schaltschütze (170) aller Energiespeicher (110) im Ruhezustand (702) des Traktionsenergiespeichersystems zu bewirken.

2. Traktionsenergiespeichersystem nach Anspruch 1, wobei die Systemsteuerung (140) die Schließstellung der Schaltschütze der mindestens zwei Energiespeicher im Nachlaufzustand (708) nach Ablauf der Messphase (706) bewirkt.

3. Traktionsenergiespeichersystem nach Anspruch 1 oder 2, wobei die Systemsteuerung (140) ferner dazu ausgebildet ist, abhängig von den erhaltenen Energiespeicherzuständen (612) einen Bedarf zum Ladungsausgleich für die Energiespeicher zu bestimmen.

4. Traktionsenergiespeichersystem nach Anspruch 3, wobei die Systemsteuerung die mindestens zwei Energiespeicher abhängig vom Bedarf des Ladungsausgleichs bestimmt.

5. Traktionsenergiespeichersystem nach Anspruch 4, wobei die Systemsteuerung (140) ferner dazu ausgebildet ist, den Energiespeicherzustand (614) und/oder einen Stromfluss der mindestens zwei Energiespeicher während der Schließstellung zu überwachen.

6. Traktionsenergiespeichersystem nach Anspruch 5, wobei die Systemsteuerung (140) ferner dazu ausgebildet ist, die Offenstellung der Schaltschütze (170) der mindestens zwei Energiespeicher (110) zu bewirken, wenn einer der überwachten Energiespeicherzustände (614) einem fehlerhaften Energiespeicher entspricht und/oder der überwachte Stromfluss größer als ein vorgegebener Maximalstrom ist.

7. Traktionsenergiespeichersystem nach einem der Ansprüche 1 bis 6, wobei die Systemsteuerung ferner dazu ausgebildet ist, den Nachlaufzustand (708) zu beenden und den Ruhezustand (702) zu beginnen, wenn eine vorgegebene Zeitdauer (616) im Nachlaufzustand (708) vergangen ist.

8. Traktionsenergiespeichersystem nach einem der Ansprüche 1 bis 7, wobei die Systemsteuerung (140) ferner dazu ausgebildet ist, Fahrzeuganweisungen (406) vom Fahrzeug zu erhalten, wobei eine Einschaltanweisung (703) den Betriebszustand (704) bewirkt und eine Abschaltanweisung (610) den Nachlaufzustand (708) bewirkt.

9. Traktionsenergiespeichersystem nach einem der Ansprüche 1 bis 8, ferner eine mit dem Fahrzeug elektrisch verbundene oder verbindbare Systemhochvoltschnittstelle (162) und ein Systemschaltschütz (164) umfassend, das dazu ausgebildet ist, die parallel geschalteten Energiespeicherhochvoltschnittstellen (114) mit der Systemhochvoltschnittstelle (162) nach Vorgabe der Systemsteuerung (140) in einer Schließstellung des Systemschaltschützes zu verbinden und in einer Offenstellung des Systemschaltschützes zu trennen, wobei die Systemsteuerung dazu ausgebildet ist, die Schließstellung des Systemschaltschützes im Betriebszustand (704) zu bewirken und die Offenstellung des Systemschaltschützes im Nachlaufzustand (708) zu bewirken.

10. Traktionsenergiespeichersystem nach einem der Ansprüche 1 bis 9, wobei jede der Zellmodulsteuerungen (124) dazu ausgebildet ist, die Speicherzellen (122) im jeweiligen Zellmodul (120) betreffende Messwerte auszugeben, und jede der Energiespeichersteuerungen (130) dazu ausgebildet ist, die Messwerte von den Zellmodulen im jeweiligen Energiespeicher (110) zu erhalten und abhängig von den erhaltenen Messwerten ein Signal (402) zu erzeugen.

11. Traktionsenergiespeichersystem nach Anspruch 10, wobei eine der Energiespeichersteuerungen (130) die Funktion der Systemsteuerung (140) ausführt.

12. Traktionsenergiespeichersystem nach Anspruch 11, wobei jeder der Energiespeicher (110) ferner eine erste Datenschnittstelle (142) und eine zweite Datenschnittstelle (144) umfasst, die jeweils im Energiespeicher mit der Energiespeichersteuerung (130) verbunden ist,
wobei bei den Energiespeichern (110-S), welche nicht die Funktion der Systemsteuerung (140) ausführen, die erste Datenschnittstelle (142) außerhalb des Energiespeichers unverbunden ist, und die zweite Datenschnittstelle (144) verbunden ist zur Ausgabe des Signals (402) an die zweite Datenschnittstelle (144) des Energiespeichers (110-M), welcher die Funktion der Systemsteuerung (140) ausführt; und
wobei bei dem Energiespeicher (110-M), welcher die Funktion der Systemsteuerung (140) ausführt, die erste Datenschnittstelle (142) außerhalb des Energiespeichers mit dem Fahrzeug verbunden ist zur Ausgabe eines Systemsignals (404), und die zweite Datenschnittstelle (144) verbunden ist zum Erhalt der Signale von den zweiten Datenschnittstellen (144) der Energiespeicher (110-S), welche nicht die Funktion der Systemsteuerung (140) ausführen.

13. Traktionsenergiespeichersystem nach einem der Ansprüche 1 bis 12, wobei jeder der Energiespeicher (110) in jeweils einem eigenen Gehäuse (112) angeordnet ist.

14. Kraftfahrzeug, insbesondere Nutzfahrzeug, das ein Traktionsenergiespeichersystem (100) nach einem der Ansprüche 1 bis 13 umfasst.

## Claims

1. A traction energy storage system (100) for a vehicle, comprising:
multiple electrical energy stores (110),
wherein each of the energy stores comprises multiple cell modules (120) electrically connected via busbars (128), one or more contactors (170) and an energy store controller (130) for controlling the cell modules (120) and the contactor or contactors (170), and each of the cell modules comprises multiple storage cells (122) and a cell module controller (124),
wherein the contactor or contactors (170) in each energy store (110) are designed to connect the busbars (128) of the energy store to an energy store high-voltage interface (114) of the respective energy store, as specified by the energy store controller (130), in a closed position of the contactor or contactors (170) and to isolate said busbars in an open position of the contactor or contactors (170), and
wherein the energy store high-voltage interfaces (114) of the energy stores (110) are connected in parallel in the traction energy storage system; and
a system controller (140) operatively connected to the energy store controllers (130), which is designed to produce the closed position of the contactors (170) of all the energy stores (110) in an operating state (704) of the traction energy storage system,
to receive signals (402) indicating an energy storage state (612; 614) of the energy stores (110) from the respective energy store controllers (130);
to produce the open position of the contactors (170) of the energy stores (110) for a measurement phase (706) of a run-on state (708), wherein the received energy storage states (612; 614) are based on an open-circuit voltage of the respective energy store (110) measured in the measurement phase (706), and to produce the closed position of the contactors (170) of at least two of the energy stores (110), which are a genuine subset of all the energy stores (110), in the run-on state (708) of the traction energy storage system, wherein, in the run-on state (708), the closed contactors (130) connect the at least two energy stores (110) via their parallel-connected energy store high-voltage interfaces (114) for the purpose of charge exchange in order to equalize an inequality of the energy storage states (612; 614) that has arisen in the operating state (704), and
to terminate the run-on state (708) and to begin an idle state (702) if there is less than a prescribed difference between the energy storage states (612; 614), wherein the system controller (140) is designed to produce the open position of the contactors (170) of all the energy stores (110) in the idle state (702) of the traction energy storage system.

2. Traction energy storage system according to Claim 1, wherein the system controller (140) produces the closed position of the contactors of the at least two energy stores in the run-on state (708) after the measurement phase (706) has elapsed.

3. Traction energy storage system according to Claim 1 or 2, wherein the system controller (140) is further designed to take the received energy storage states (612) as a basis for determining a need for charge equalization for the energy stores.

4. Traction energy storage system according to Claim 3, wherein the system controller determines the at least two energy stores on the basis of the need for charge equalization.

5. Traction energy storage system according to Claim 4, wherein the system controller (140) is further designed to monitor the energy storage state (614) and/or a flow of current of the at least two energy stores during the closed position.

6. Traction energy storage system according to Claim 5, wherein the system controller (140) is further designed to produce the open position of the contactors (170) of the at least two energy stores (110) when one of the monitored energy storage states (614) is consistent with a faulty energy store and/or the monitored flow of current is greater than a specified maximum current.

7. Traction energy storage system according to one of Claims 1 to 6, wherein the system controller is further designed to terminate the run-on state (708) and to begin the idle state (702) when a prescribed period of time (616) in the run-on state (708) has passed.

8. Traction energy storage system according to one of Claims 1 to 7, wherein the system controller (140) is further designed to receive vehicle instructions (406) from the vehicle, wherein a switch-on instruction (703) produces the operating state (704) and a switch-off instruction (610) produces the run-on state (708).

9. Traction energy storage system according to one of Claims 1 to 8, further comprising a system high-voltage interface (162), electrically connected or connectable to the vehicle, and a system contactor (164), which is designed to connect the parallel-connected energy store high-voltage interfaces (114) to the system high-voltage interface (162), as specified by the system controller (140), in a closed position of the system contactor and to isolate said energy store high-voltage interfaces in an open position of the system contactor, wherein the system controller is designed to produce the closed position of the system contactor in the operating state (704) and to produce the open position of the system contactor in the run-on state (708).

10. Traction energy storage system according to one of Claims 1 to 9, wherein each of the cell module controllers (124) is designed to output measured values relating to the memory cells (122) in the respective cell module (120), and each of the energy store controllers (130) is designed to receive the measured values from the cell modules in the respective energy store (110) and to take the received measured values as a basis for generating a signal (402).

11. Traction energy storage system according to Claim 10, wherein one of the energy store controllers (130) performs the function of the system controller (140).

12. Traction energy storage system according to Claim 11, wherein each of the energy stores (110) further comprises a first data interface (142) and a second data interface (144), each of which is connected in the energy store to the energy store controller (130), wherein, in the case of the energy stores (110-S) that do not perform the function of the system controller (140), the first data interface (142) is unconnected outside the energy store, and the second data interface (144) is connected to output the signal (402) to the second data interface (144) of the energy store (110-M) that performs the function of the system controller (140); and
wherein, in the case of the energy store (110-M), that performs the function of the system controller (140), the first data interface (142) is connected to the vehicle outside the energy store to output a system signal (404), and the second data interface (144) is connected to receive the signals from the second data interfaces (144) of the energy stores (110-S) that do not perform the function of the system controller (140) .

13. Traction energy storage system according to one of Claims 1 to 12, wherein each of the energy stores (110) is arranged in a respective separate housing (112).

14. Motor vehicle, in particular commercial vehicle, that comprises a traction energy storage system (100) according to one of Claims 1 to 13.

## Revendications

1. Système accumulateur d'énergie de traction (100) pour un véhicule, comprenant :
plusieurs accumulateurs d'énergie (110) électriques, chacun des accumulateurs d'énergie comportant plusieurs modules de cellules (120) reliés électriquement par le biais de barres-bus (128), un ou plusieurs contacteurs (170) et une commande d'accumulateur d'énergie (130) destinée à commander les modules de cellules (120) et le contacteur ou les contacteurs (170), et chacun des modules de cellules comportant plusieurs cellules d'accumulateur (122) et une commande de module de cellules (124),
dans chaque accumulateur d'énergie (110), le contacteur ou les contacteurs (170) étant configurés pour, conformément à une prescription de la commande d'accumulateur d'énergie (130), relier les barres-bus (128) de l'accumulateur d'énergie à une interface à haute tension d'accumulateur d'énergie (114) de l'accumulateur d'énergie respectif dans une position fermée du contacteur ou des contacteurs (170) et les déconnecter dans une position ouverte du contacteur ou des contacteurs (170), et
les interfaces à haute tension d'accumulateur d'énergie (114) des accumulateurs d'énergie (110) étant branchées en parallèle dans le système accumulateur d'énergie de traction ; et
une commande de système (140) qui se trouve en liaison active avec les commandes d'accumulateur d'énergie (130), laquelle est configurée pour
provoquer la position fermée des contacteurs (170) de tous les accumulateurs d'énergie (110) dans un état de fonctionnement (704) du système accumulateur d'énergie de traction,
obtenir de la part des commandes d'accumulateur d'énergie (130) respectives des signaux (402) indiquant l'état d'accumulation d'énergie (612 ; 614) des accumulateurs d'énergie (110) ;
pour une phase de mesure (706) d'un état de fonctionnement par inertie (708), provoquer la position ouverte des contacteurs (170) des accumulateurs d'énergie (110), les états d'accumulation d'énergie (612 ; 614) obtenus se basant sur une tension à vide de l'accumulateur d'énergie (110) respectif mesurée dans la phase de mesure (706) et provoquer la position fermée des contacteurs (170) d'au moins deux des accumulateurs d'énergie (110), qui sont une partie propre de tous les accumulateurs d'énergie (110), dans l'état de fonctionnement par inertie (708) du système accumulateur d'énergie de traction, les au moins deux des accumulateurs d'énergie (110) étant, par les contacteurs (170) fermés dans l'état de fonctionnement par inertie (708), reliés pour l'échange de charge par le biais de leurs interfaces à haute tension d'accumulateur d'énergie (114) branchées en parallèle et pour la compensation d'une disparité des états d'accumulation d'énergie (612 ; 614) qui se produit dans l'état de fonctionnement (704), et
mettre fin à l'état de fonctionnement par inertie (708) et commencer un état de repos (702) lorsqu'une différence prédéfinie des états d'accumulation d'énergie (612 ; 614) est franchie vers le bas, la commande de système (140) étant configurée pour provoquer la position ouverte des contacteurs (170) de tous les accumulateurs d'énergie (110) à l'état de repos (702) du système accumulateur d'énergie de traction.

2. Système accumulateur d'énergie de traction selon la revendication 1, la commande de système (140) provoquant la position fermée des contacteurs d'au moins deux accumulateurs d'énergie dans l'état de fonctionnement par inertie (708) après écoulement de la phase de mesure (706) .

3. Système accumulateur d'énergie de traction selon la revendication 1 ou 2, la commande de système (140) étant en outre configurée pour déterminer un besoin en équilibrage de charge pour les accumulateurs d'énergie en fonction des états d'accumulation d'énergie (612) obtenus.

4. Système accumulateur d'énergie de traction selon la revendication 3, la commande de système déterminant les au moins deux accumulateurs d'énergie en fonction du besoin en équilibrage de charge.

5. Système accumulateur d'énergie de traction selon la revendication 4, la commande de système (140) étant en outre configurée pour surveiller l'état d'accumulation d'énergie (614) et/ou un flux de courant des au moins deux accumulateurs d'énergie pendant la position fermée.

6. Système accumulateur d'énergie de traction selon la revendication 5, la commande de système (140) étant en outre configurée pour provoquer la position ouverte des contacteurs (170) des au moins deux accumulateurs d'énergie (110) lorsque l'un des états d'accumulation d'énergie (614) surveillés correspond à un accumulateur d'énergie défaillant et/ou le flux de courant surveillé est supérieur à un courant maximal prédéfini.

7. Système accumulateur d'énergie de traction selon l'une des revendications 1 à 6, la commande de système étant en outre configurée pour mettre fin à l'état de fonctionnement par inertie (708) et commencer l'état de repos (702) lorsqu'une durée (616) prédéfinie dans l'état de fonctionnement par inertie (708) s'est écoulée.

8. Système accumulateur d'énergie de traction selon l'une des revendications 1 à 7, la commande de système (140) étant en outre configurée pour obtenir des instructions de véhicule (406) de la part du véhicule, une instruction de mise en circuit (703) provoquant l'état de fonctionnement (704) et une instruction de mise hors circuit (610) provoquant l'état de fonctionnement par inertie (708).

9. Système accumulateur d'énergie de traction selon l'une des revendications 1 à 8, comprenant en outre une interface à haute tension de système (162) reliée ou pouvant être reliée électriquement avec le véhicule et un contacteur de système (164), lequel est configuré pour, conformément à une prescription de la commande de système (140), relier les interfaces à haute tension d'accumulateur d'énergie (114) branchées en parallèle à l'interface à haute tension de système (162) dans une position fermée du contacteur de système et les déconnecter dans une position ouverte du contacteur de système, la commande de système étant configurée pour provoquer la position fermée du contacteur de système dans l'état de fonctionnement (704) et pour provoquer la position ouverte du contacteur de système dans l'état de fonctionnement par inertie (708).

10. Système accumulateur d'énergie de traction selon l'une des revendications 1 à 9, chacune des commandes de module de cellules (124) étant configurée pour délivrer des valeurs mesurées concernant les cellules d'accumulateur (122) dans le module de cellules (120) concerné, et chacune des commandes d'accumulateur d'énergie (130) étant configuré pour obtenir les valeurs mesurées de la part des modules de cellules dans les accumulateurs d'énergie (110) respectifs et générer un signal (402) en fonction des valeurs mesurées obtenues.

11. Système accumulateur d'énergie de traction selon la revendication 10, l'une des commandes d'accumulateur d'énergie (130) exécutant la fonction de la commande de système (140).

12. Système accumulateur d'énergie de traction selon la revendication 11, chacun des accumulateurs d'énergie (110) comportant en outre une première interface de données (142) et une deuxième interface de données (144), qui sont respectivement reliées à la commande d'accumulateur d'énergie (130) dans l'accumulateur d'énergie,
sur les accumulateurs d'énergie (110-S) qui n'exécutent pas la fonction de la commande de système (140), la première interface de données (142) étant non reliée à l'extérieur de l'accumulateur d'énergie et la deuxième interface de données (144) étant reliée en vue de délivrer le signal (402) au niveau de la deuxième interface de données (144) de l'accumulateur d'énergie (110-M) qui exécute la fonction de la commande de système (140) ; et
sur l'accumulateur d'énergie (110-M) qui exécute la fonction de la commande de système (140), la première interface de données (142) étant reliée à l'extérieur de l'accumulateur d'énergie avec le véhicule en vue de délivrer un signal de système (404) et la deuxième interface de données (144) étant reliée en vue de recevoir les signaux de la deuxième interface de données (144) des accumulateurs d'énergie (110-S) qui n'exécutent pas la fonction de la commande de système (140).

13. Système accumulateur d'énergie de traction selon l'une des revendications 1 à 12, chacun des accumulateurs d'énergie (110) étant respectivement disposé dans un boîtier (112) propre.

14. Véhicule automobile, notamment véhicule utilitaire, qui comporte un système accumulateur d'énergie de traction (100) selon l'une des revendications 1 à 13.
